# EUROPÄISCHE PATENTSCHRIFT

(11) **EP 3 976 680 B1**
(45) Veröffentlichungstag und Bekanntmachung des Hinweises auf die Patenterteilung: **26.11.2025**
(21) Anmeldenummer: 20729064.4
(22) Anmeldetag: 28.05.2020
(51) Int. Cl.: C08G 18/10, C08G 18/28, C08G 18/48, C08G 18/75, C08G 18/76, C08L 63/00, C09J 163/00, C09J 175/08

(54) **ZWEIKOMPONENTIGE ZUSAMMENSETZUNG MIT HOHER FESTIGKEIT**
TWO-COMPONENT COMPOSITION HAVING HIGH STRENGTH
COMPOSITION À DEUX COMPOSANTS À RÉSISTANCE ÉLEVÉE

(30) Priorität: 28.05.2019 EP 19177084
(43) Veröffentlichungstag der Anmeldung: 06.04.2022
(73) Patentinhaber: Sika Technology AG, 6340 Baar (CH)
(72) Erfinder: MENNECKE, Klaas, 79807 Lottstetten (DE); CHOFFAT, Fabien, 4522 Rüttenen (CH); STADELMANN, Ursula, 8046 Zürich (CH)
(74) Vertreter: Sika Patent Attorneys
(86) Internationale Anmeldenummer: PCT/EP2020/064860
(87) Internationale Veröffentlichungsnummer: WO 2020/239918

(56) Entgegenhaltungen:
- EP-A1- 2 562 223
- WO-A1-2017/140688
- US-A1- 2017 292 050

## Beschreibung

### Technisches Gebiet

Die Erfindung betrifft bei Raumtemperatur härtbare Zusammensetzungen auf Basis einer Kombination aus Silangruppen-haltigem Polymer und Epoxidharz, sowie deren Verwendung, insbesondere als zähelastischer Klebstoff, Beschichtung oder Vergussmasse mit hoher Festigkeit, Dehnbarkeit und Beständigkeit.

### Stand der Technik

Klebstoffe, Vergussmassen und Beschichtungen auf Basis von Polyurethanen oder Epoxidharzen sind bekannt und werden vielfältig eingesetzt. Materialien auf Polyurethanbasis verfügen über eine hohe Dehnbarkeit, sind aber limitiert bei den erreichbaren Festigkeiten. Zudem sind sie empfindlich bei Verwendung in nasser oder feuchter Umgebung und zeigen Schwächen bei der Beständigkeit gegenüber Glykol/Wasser Mischungen, wie sie beispielsweise als Kühlflüssigkeit für Batterien in Elektrofahrzeugen verwendet werden, und bei der Haftung auf Metallen unter korrosiven Bedingungen. Materialien auf Epoxidharzbasis ermöglichen sehr hohe Festigkeiten, Haftkräfte und Beständigkeiten, sind aber limitiert bei der Dehnbarkeit und zeigen Schwächen bei der Haftung auf Aluminium unter korrosiven Bedingungen wie Salzwasserbelastung.

Weiterhin bekannt sind Materialien, welche silanfunktionelle Polymere mit Epoxidharzen kombinieren. Damit werden deutlich höhere Festigkeiten erreicht als mit dem silanfunktionellen Polymer allein. Bekannt sind solche Zusammensetzungen auf der Basis von sogenannten MS-Polymeren, wie sie von der Firma Kaneka im Handel sind. Dies sind silanfunktionelle Polymere aus der Hydrosilylierung von Polyolen mit Allylether-Endgruppen. Solche Zusammensetzungen sind beispielsweise beschrieben in EP 370'464 oder US 6'737'482. Mit der Kombination von MS-Polymeren und Epoxidharzen sind aber nur sehr limitierte Festigkeiten erreichbar.

Weiterhin bekannt sind Zusammensetzungen mit Epoxidharzen und silanfunktionellen Polymeren aus der Umsetzung von Polyolen mit Isocyanatosilanen oder aus der Umsetzung von Polyolen mit Diisocyanaten zu isocyanatfunktionellen Polymeren, die dann mit Aminosilanen zu silanfunktionellen Polymeren weiterreagiert werden. Solche Systeme sind beispielsweise beschrieben in US 2017/0292050 oder WO 2017/140688. Die höchsten Festigkeiten werden dabei erreicht mit silanfunktionellen Polymeren abgeleitet von Isocyanatgruppen-haltigen Polymeren und Aminosilanen. Die dabei eingesetzten Silangruppen-haltigen Polymere sind abgeleitet von langkettigen Polyetherdiolen mit einem mittleren Molekulargewicht Mₙ von etwa 12'000 g/mol und weisen dementsprechend einen geringen Gehalt an Silangruppen auf. Ein weiteres Beispiel einer solchen Zusammensetzung ist in EP 2 562 223 A1 offenbart. Dort wird eine zweikomponentige Zusammensetzung gelehrt, die eine erste Komponente umfassend ein silanfunktionelles Polymer und einen Härter oder Beschleuniger für Epoxidharze umfasst, sowie eine zweiten Komponente enthaltend eine wässrige Emulsion eines Epoxidharzes. Das silanfunktionelle Polymer ist dabei nicht speziell definiert.

Für gewisse Anwendungen sind aber noch deutlich höhere Festigkeiten erwünscht, in Kombination mit hohen Haftkräften, hohem Weiterreisswiderstand und hohen Beständigkeiten, beispielsweise für die Verklebung von Batterieboxen von Elektrofahrzeugen. Dort ist insbesondere eine hohe Beständigkeit der Verklebungen auf Aluminiumsubstraten unter korrosiven Bedingungen wie insbesondere Salzwasserbelastung gefordert, sowie eine hohe Beständigkeit gegenüber Glykol/Wasser Mischungen, was für Klebstoffe auf der Basis von Acrylaten, Polyurethanen und/oder Epoxidharzen schwierig zu erreichen ist.

### Darstellung der Erfindung

Aufgabe der vorliegenden Erfindung ist es daher, eine Zusammensetzung zur Verfügung zu stellen, welche bei Raumtemperatur schnell und zuverlässig aushärtet, auch bei Nässe oder Feuchtigkeit, und hohe Festigkeiten bei hoher Dehnbarkeit, hohe Haftkräfte, gute Beständigkeiten, insbesondere gegen Glykol/Wasser Mischungen, und eine korrosionsbeständige Haftung auf Metallen ermöglicht. Überraschenderweise wird diese Aufgabe mit einer Zusammensetzung wie in Anspruch 1 beschrieben gelöst. Die Zusammensetzung enthält mindestens ein Silangruppen-haltiges Polymer mit einem Silicium-Gehalt im Bereich von 0.6 bis 2 Gewichts-%, erhalten aus der Umsetzung von mindestens einem Isocyanatgruppen-haltigen Polymer und mindestens einem Amino-, Mercapto- oder Hydroxysilan. Ein solches Polymer wurde im Stand der Technik bisher nicht in Kombination mit Epoxidharzen ausgeführt. Im Vergleich zu entsprechenden Zusammensetzungen mit einem Silangruppen-haltigen Polymer mit geringerem Silicium-Gehalt, wie sie aus dem Stand der Technik bekannt sind, zeigen die erfindungsgemässen Zusammensetzungen überraschenderweise eine massiv höhere Festigkeit bei ähnlich hoher Dehnbarkeit, einen viel höheren Weiterreisswiderstand und hervorragende Haftkräfte, insbesondere auf Metallen unter korrosiven Bedingungen, bei ausgezeichneter Beständigkeit gegenüber Hydrolyse und Glykol/Wasser Mischungen.

Die erfindungsgemässe Zusammensetzung ermöglicht Klebstoffe, Beschichtungen oder Vergussmassen mit guter Lagerstabilität als zweikomponentige Produkte, welche nach dem Vermischen schnell und weitgehend geruchsfrei aushärten, auch in Anwesenheit von Nässe oder Feuchtigkeit, und dabei Materialien von überraschend hoher Festigkeit bei hoher Dehnbarkeit, einem hohem Weiterreisswiderstand und hoher Beständigkeit, insbesondere gegenüber Glykol/Wasser Mischungen, bilden, mit sehr hohen Haftkräften auf vielen Substraten, auch auf feuchten oder nassen Substraten, wobei die Zusammensetzung bei der Verwendung auf Metallen wie Stahl oder Aluminium diese vor Korrosion schützen kann. Insbesondere ermöglicht die Zusammensetzung zähelastische Klebstoffe, mit denen Metalle, insbesondere Aluminium, ohne Vorbehandlung verklebt werden können, so dass die Verklebung unter korrosiven Bedingungen wie insbesondere Salzwasserbelastung beständig ist. Weiterhin ermöglicht die Zusammensetzung Beschichtungen, mit welchen Metalle wie Stahl oder Aluminium vor Korrosion geschützt werden können. Und schliesslich ermöglicht die Zusammensetzung Vergussmassen, mit welchen Risse in Beton, Asphalt oder Bitumen dauerhaft verfüllt und somit repariert werden können, wobei auch auf nassem Untergrund eine hervorragende Haftung entsteht. Somit können stark belastete Strassen oder Plätze mit Schäden auf der Fläche oder an Randsteinen, Borten oder Begrenzungen auf einfache Weise dauerhaft repariert werden. Schliesslich sind diese Produkte bei der Verarbeitung frei von Isocyanaten, was aus toxikologischen Gründen vorteilhaft ist.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der Erfindung ist eine Zusammensetzung umfassend
- mindestens ein Silangruppen-haltiges Polymer mit einem Silicium-Gehalt im Bereich von 0.6 bis 2 Gewichts-%, erhalten aus der Umsetzung von mindestens einem Isocyanatgruppen-haltigen Polymer und mindestens einem Amino-, Mercapto- oder Hydroxysilan,
- mindestens ein Epoxid-Flüssigharz und
- mindestens ein Polyamin mit mindestens drei gegenüber Epoxidgruppen reaktiven Aminwasserstoffen.

Im vorliegenden Dokument bezeichnet der Begriff "Alkoxysilangruppe" oder kurz "Silangruppe" eine an einen organischen Rest gebundene Silylgruppe mit einem bis drei, insbesondere zwei oder drei, hydrolysierbaren Alkoxy-Resten am Silicium-Atom.

Entsprechend bezeichnet der Begriff "Organosilan" oder kurz "Silan" eine organische Verbindung, welche mindestens eine Silangruppe aufweist.

Als "Aminosilan", "Mercaptosilan" oder "Hydroxysilan" werden Organosilane bezeichnet, die am organischen Rest zusätzlich zur Silangruppe eine Amino-, Mercapto- oder Hydroxylgruppe aufweisen.

Als "Silicium-Gehalt" eines Silangruppen-haltiges Polymers wird der Silicium-Gehalt des Polymers in Gewichts-% bezogen auf 100 Gewichts-% Polymer bezeichnet. Eine Verdünnung des Polymers mit Lösemittel oder Weichmacher wird dabei nicht als Bestandteil des Polymers gerechnet. Ebenfalls nicht zum Silicum-Gehalt eines Silangruppen-haltigen Polymers werden silanfunktionelle Additive wie z.B. haftvermittelnde Organosilane gerechnet, welche gegebenenfalls zusätzlich in der Zusammensetzung enthalten sein können. Solche Substanzen gelten nicht als Silangruppen-haltige Polymere im Sinne der Erfindung.

Als "NCO-Gehalt" eines Polymers wird der Gehalt des Polymers an Isocyanatgruppen in Gewichts-% bezeichnet.

Als "aromatisch" wird eine Isocyanatgruppe bezeichnet, welche direkt an ein aromatisches C-Atom gebunden ist.

Mit "Poly" beginnende Substanznamen wie Polyamin oder Polyol bezeichnen Substanzen, die formal zwei oder mehr der in ihrem Namen vorkommenden funktionellen Gruppen pro Molekül enthalten.

Als "Aminwasserstoff" werden die Wasserstoffatome von primären und sekundären Aminogruppen bezeichnet.

Als "primäre Aminogruppe" wird eine Aminogruppe bezeichnet, die an einen einzigen organischen Rest gebunden ist und zwei Wasserstoffatome trägt; als "sekundäre Aminogruppe" wird eine Aminogruppe bezeichnet, die an zwei organische Reste, welche auch gemeinsam Teil eines Rings sein können, gebunden ist und ein Wasserstoffatom trägt; und als "tertiäre Aminogruppe" wird eine Aminogruppe bezeichnet, die an drei organische Reste, welche auch zu zweit oder zu dritt Teil eines oder mehrerer Ringe sein können, gebunden ist und kein Wasserstoffatom trägt.

Als "Molekulargewicht" wird die molare Masse (in Gramm pro Mol) eines Moleküls oder eines Molekül-Rests bezeichnet. Als "mittleres Molekulargewicht" wird das Zahlenmittel des Molekulargewichts (Mₙ) einer polydispersen Mischung von oligomeren oder polymeren Molekülen oder Molekül-Resten bezeichnet. Es wird mittels Gelpermeationschromatographie (GPC) gegen Polystyrol als Standard bestimmt, insbesondere mit Tetrahydrofuran als mobiler Phase und Brechungsindex-Detektor.

Als "lagerstabil" oder "lagerfähig" wird eine Substanz oder eine Zusammensetzung bezeichnet, die bei Raumtemperatur in einem geeigneten Gebinde während längerer Zeit, typischerweise während mindestens 3 Monaten bis zu 6 Monaten und mehr, aufbewahrt werden kann, ohne dass sie sich in ihren Anwendungs- oder Gebrauchseigenschaften durch die Lagerung in einem für ihren Gebrauch relevanten Ausmass verändert.

Als "Raumtemperatur" wird eine Temperatur von 23°C bezeichnet.

Alle im Dokument erwähnten Industriestandards und Normen beziehen sich auf die zum Zeitpunkt der Einreichung der Erstanmeldung gültigen Fassungen. Gewichtsprozente (Gewichts-% oder Gew.%), bezeichnen Massenanteile eines Bestandteils eines Polymers oder einer Zusammensetzung, bezogen auf das gesamte Polymer oder die gesamte Zusammensetzung, falls nichts anderes angeben. Die Begriffe "Masse" und "Gewicht" werden im vorliegenden Dokument synonym benutzt.

Eine gestrichelte Linie in den Formeln in diesem Dokument stellt jeweils die Bindung zwischen einem Substituenten und dem zugehörigen Molekülrest dar.

Bevorzugt ist das Silangruppen-haltige Polymer bei Raumtemperatur flüssig.

Bevorzugt weist das Silangruppen-haltige Polymer im Mittel 1.3 bis 4, besonders bervorzugt 1.5 bis 3, insbesondere 1.7 bis 2.8, Silangruppen pro Molekül auf. Am meisten bevorzugt weist das Silangruppen-haltige Polymer im Mittel 1.7 bis 2.3 Silangruppen pro Molekül auf.

Bevorzugt weist das Silangruppen-haltige Polymer einem Silicium-Gehalt im Bereich von 0.7 bis 1.5 Gewichts-%, insbesondere 0.8 bis 1.2 Gewichts-% auf. Eine solche Zusammensetzung ermöglicht eine besonders vorteilhafte Kombination aus hoher Festigkeit und hoher Dehnbarkeit.

Bevorzugt weist das Silangruppen-haltige Polymer ein mittleres Molekulargewicht Mₙ im Bereich von 2'000 bis 10'000 g/mol, besonders bevorzugt 3'000 bis 8'000 g/mol, insbesondere 4'000 bis 7'000 g/mol, auf.

Bevorzugt weist das Silangruppen-haltige Polymer mehrheitlich Polyoxyalkylen-Einheiten, insbesondere Polyoxypropylen-Einheiten, auf.

Bevorzugt weist das Silangruppen-haltige Polymer Silangruppen der Formel (I) auf, 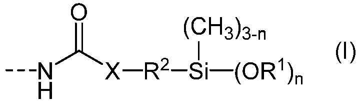 wobei
n für 1 oder 2 oder 3 steht, insbesondere für 2 oder 3,
R¹ für einen linearen oder verzweigten, einwertigen Kohlenwasserstoffrest mit 1 bis 5 C-Atomen steht,
R² für einen linearen oder verzweigten, zweiwertigen Kohlenwasserstoffrest mit 1 bis 12 C-Atomen, welcher gegebenenfalls cyclische und/oder aromatische Anteile und gegebenenfalls ein oder mehrere Heteroatome, insbesondere eine Amido-, Carbamat- oder Morpholinogruppe, aufweist, steht,
X für O oder S oder NR³ steht, wobei R³ für ein Wasserstoffatom oder einen linearen oder verzweigten Kohlenwasserstoff-Rest mit 1 bis 20 C-Atomen, welcher gegebenenfalls cyclische Anteile aufweist, und welcher gegebenenfalls eine Alkoxysilylgruppe oder Ether- oder Carbonsäureestergruppen aufweist, steht.

Bevorzugt steht n für 3. Eine solche Zusammensetzung härtet besonders schnell aus und ermöglicht besonders hohe Festigkeiten.

Bevorzugt steht R¹ für Methyl oder Ethyl oder Isopropyl.

Besonders bevorzugt steht R¹ für Methyl. Solche Silangruppen-haltige Polymere sind besonders reaktiv.

Weiterhin besonders bevorzugt steht R¹ für Ethyl. Solche Silangruppen-haltige Polymere sind besonders lagerstabil und toxikologisch vorteilhaft.

Bevorzugt steht X für O oder NR³.

Bevorzugt steht R³ für H, Butyl, Phenyl oder einen verzweigten aliphatischen Rest mit 6 bis 20 C-Atomen, welcher gegebenenfalls Ether- oder Carbonsäureestergruppen aufweist.

Am meisten bevorzugt steht X für NR³ und R³ für 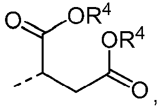 wobei R⁴ jeweils für Methyl oder Ethyl, insbesondere für Ethyl, steht. Solche Silangruppen-haltige Polymere sind einfach zugänglich und ermöglichen besonders hohe Festigkeiten bei hoher Dehnbarkeit und Beständigkeit.

Im Fall von X = NR³ steht R² bevorzugt für 1,3-Propylen oder für 1,4-Butylen, wobei Butylen mit einer oder zwei Methylgruppen substituiert sein kann, besonders bevorzugt für 1,3-Propylen.

Im Fall von X = O steht R² bevorzugt für einen zweiwertigen Kohlenwasserstoffrest mit 6 bis 12 C-Atomen, welcher eine Amido-, Carbamat- oder Morpholinogruppe aufweist, insbesondere für einen Rest der Formel

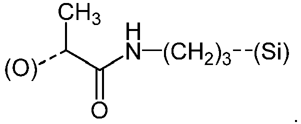

Die bevorzugten Silangruppen-haltigen Polymere ermöglichen Zusammensetzungen mit einer besonders attraktiven Kombination aus hoher Festigkeit bei hoher Dehnbarkeit.

Das Silangruppen-haltige Polymer wird erhalten aus der Umsetzung von mindestens einem Isocyanatgruppen-haltigen Polymer und mindestens einem Amino-, Mercapto- oder Hydroxysilan.

Das Isocyanatgruppen-haltige Polymer weist bevorzugt einen NCO-Gehalt im Bereich von 1.2 bis 4 Gewichts-%, insbesondere 1.2 bis 2.8 Gewichts-%, auf. Ein solches Isocyanatgruppen-haltiges Polymer ermöglicht einen erfindungsgemässen Silangruppen-Gehalt bei Umsetzung mit den bevorzugten Silanen.

Das Isocyanatgruppen-haltige Polymer wird seinerseits insbesondere erhalten aus der Umsetzung von mindestens einem Polyol und mindestens einem Diisocyanat.

Die Umsetzung wird bevorzugt unter Feuchtigkeitsausschluss bei einer Temperatur im Bereich von 20 bis 160°C, insbesondere 40 bis 140°C, durchgeführt, gegebenenfalls in Anwesenheit geeigneter Katalysatoren.

Das molare NCO/OH-Verhältnis liegt bevorzugt im Bereich von 1.3/1 bis 2.5/1.

Als Polyol für die Herstellung des Isocyanatgruppen-haltigen Polymers geeignet sind bei Raumtemperatur flüssige Polyole, insbesondere die folgenden handelsübliche Polyole oder beliebige Mischungen davon:
- Polyetherpolyole, insbesondere Polyoxyalkylendiole und/oder Polyoxyalkylentriole, insbesondere Polymerisationsprodukte von Ethylenoxid oder 1,2-Propylenoxid oder 1,2- oder 2,3-Butylenoxid oder Oxetan oder Tetrahydrofuran oder Mischungen davon, wobei diese mit Hilfe eines Startermoleküls mit zwei oder drei aktiven Wasserstoffatomen polymerisiert sein können, insbesondere einem Startermolekül wie Wasser, Ammoniak oder einer Verbindung mit mehreren OH- oder NH-Gruppen wie beispielsweise 1,2-Ethandiol, 1,2- oder 1,3-Propandiol, Neopentylglykol, Diethylenglykol, Triethylenglykol, die isomeren Dipropylenglykole oder Tripropylenglykole, die isomeren Butandiole, Pentandiole, Hexandiole, Heptandiole, Octandiole, Nonandiole, Decandiole, Undecandiole, 1,3- oder 1,4-Cyclohexandimethanol, Bisphenol A, hydriertes Bisphenol A, 1,1,1-Trimethylolethan, 1,1,1-Trimethylolpropan, Glycerin oder Anilin, oder Mischungen der vorgenannten Verbindungen.
   Bevorzugte Polyetherpolyole sind Polyoxypropylendiole oder Polyoxypropylentriole, oder sogenannte Ethylenoxid-terminierte (EO-capped) Polyoxypropylendiole oder -triole. Letztere sind Polyoxyethylenpolyoxypropylen-Mischpolyole, die insbesondere dadurch erhalten werden, dass Polyoxypropylendiole oder -triole nach Abschluss der Polypropoxylierungsreaktion mit Ethylenoxid weiter alkoxyliert werden und dadurch primäre Hydroxylgruppen aufweisen.
   Bevorzugte Polyetherpolyole weisen einen Ungesättigtheitsgrad von weniger als 0.02 mEq/g, insbesondere weniger als 0.01 mEq/g auf.
- Polyetherpolyesterpolyole.
- Polyacrylat- und Polymethacrylatpolyole,
- Polyacrylat- oder Polymethacrylatpolyole.
- Polyhydroxyfunktionelle Fette oder Öle, beispielsweise natürliche Fette und Öle, inbesondere Ricinusöl; oder durch chemische Modifizierung von natürlichen Fetten und Ölen gewonnene - sogenannte oleochemische - Polyole.
- Polykohlenwasserstoffpolyole, auch Oligohydrocarbonole genannt, wie insbesondere polyhydroxyfunktionelle Polyolefine, Polyisobutylene, Polyisoprene; polyhydroxyfunktionelle Ethylen-Propylen-, Ethylen-Butylen- oder Ethylen-Propylen-Dien-Copolymere, wie sie beispielsweise von der Firma Kraton Polymers hergestellt werden; polyhydroxyfunktionelle Polymere von Dienen, insbesondere von 1,3-Butadien, welche insbesondere auch aus anionischer Polymerisation hergestellt sein können; polyhydroxyfunktionelle Copolymere aus Dienen wie 1,3-Butadien oder Diengemischen und Vinylmonomeren wie Styrol, Acrylonitril, Vinylchlorid, Vinylacetat, Vinylalkohol, Isobutylen oder Isopren, insbesondere polyhydroxyfunktionelle Acrylonitril/ Butadien-Copolymere, wie sie insbesondere aus Epoxiden oder Aminoalkoholen und carboxylterminierten Acrylonitril/Butadien-Copolymeren (beispielsweise kommerziell erhältlich unter dem Namen Hypro^{®} CTBN oder CTBNX oder ETBN von Emerald Performance Materials) hergestellt werden können; oder hydrierte polyhydroxyfunktionelle Polymere oder Copolymere von Dienen.

Bevorzugt sind Polyetherpolyole, insbesondere Polyoxyalkylendi- oder -triole. Besonders bevorzugt sind Polyoxypropylendiole oder Polyoxypropylentriole, welche endständig gegebenenfalls Oxyethylengruppen aufweisen.

Bevorzugt sind Polyole mit einer mittleren OH-Funktionalität im Bereich von 1.6 bis 3, insbesondere Diole mit einer mittleren OH-Funktionalität im Bereich von 1.8 bis 2.

Bevorzugt sind Polyole, insbesondere Diole, mit einem mittleren Molekulargewicht Mₙ im Bereich von 1'000 bis 8'000 g/mol, insbesondere 2'000 bis 6'000 g/mol, besonders bevorzugt 3'000 bis 5'000 g/mol.

Bei der Herstellung eines Isocyanatgruppen-haltigen Polymers können auch Anteile von zwei- oder mehrfunktionellen Alkoholen mitverwendet werden.

Bevorzugt wird das Isocyanatgruppen-haltige Polymer erhalten aus der Umsetzung von mindestens einem Polyoxypropylendiol mit einer OH-Zahl im Bereich von 18 bis 58 mg KOH/g, insbesondere 22 bis 40 mg KOH/g, welches endständig gegebenenfalls Oxyethylengruppen aufweist, und mindestens einem Diisocyanat. Gegebenenfalls wird bei der Herstellung des Isocyanatgruppen-haltigen Polymers mindestens ein weiteres Polyol mitverwendet, insbesondere ein Polyoxypropylen-triol, welches endständig gegebenenfalls Oxyethylengruppen aufweist.

Als Diisocyanat für die Herstellung des Isocyanatgruppen-haltigen Polymers geeignet sind Diisocyanate mit aliphatischen Isocyanatgruppen, insbesondere 1,6-Hexandiisocyanat (HDI), 2,2(4),4-Trimethyl-1,6-hexamethylendiisocyanat (TMDI), Cyclohexan-1,3- oder -1,4-diisocyanat, 1-Isocyanato-3,3,5-trimethyl-5-isocyanatomethylcyclohexan (Isophorondiisocyanat oder IPDI), Perhydro-2,4'- oder -4,4'-diphenylmethandiisocyanat (HMDI), 1,3- oder 1,4-Bis(isocyanatomethyl)cyclohexan oder m- oder p-Xylylendiisocyanat (XDI).

Bevorzugt für die Herstellung des Isocyanatgruppen-haltigen Polymers sind Diisocyanate mit aromatischen Isocyanatgruppen, insbesondere 4,4'-Diphenylmethandiisocyanat, gegebenenfalls mit Anteilen von 2,4'- und/oder 2,2'-Diphenylmethandiisocyanat (MDI), 2,4-Toluylendiisocyanat oder Gemische davon mit 2,6-Toluylendiisocyanat (TDI), 1,4-Phenylendiisocyanat (PDI) oder Naphthalin-1,5-diisocyanat (NDI), sowie Gemische der genannten Diisocyanate.

Bevorzugt sind HDI, IPDI, MDI oder TDI, insbesondere IPDI, MDI oder TDI, am meisten bevorzugt ist MDI oder TDI.

In einer bevorzugten Ausführungsform der Erfindung weist das Isocyanatgruppen-haltige Polymer aromatische Isocyanatgruppen auf. Ein damit erhaltenes Silangruppen-haltiges Polymer ermöglicht kostengünstige Zusammensetzungen mit besonders hoher Festigkeit.

Insbesondere sind die aromatischen Isocyanatgruppen abgeleitet von 4,4'-Diphenylmethandiisocyanat, gegebenenfalls mit Anteilen von 2,4'- und/oder 2,2'-Diphenylmethandiisocyanat (MDI), oder 2,4-Toluylendiisocyanat oder Gemischen davon mit 2,6-Toluylendiisocyanat (TDI).

Besonders bevorzugt ist das Diisocyanat somit ausgewählt aus der Gruppe bestehend aus 4,4'-Diphenylmethandiisocyanat, 2,4'-Diphenylmethandiisocyanat, 2,4-Toluylendiisocyanat und 2,6-Toluylendiisocyanat.

Das Amino- oder Mercapto- oder Hydroxysilan für die Umsetzung mit dem Isocyanatgruppen-haltigen Polymer weist bevorzugt die Formel (II) auf, 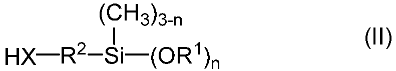 wobei n, R¹, R² und X die bereits genannten Bedeutungen aufweisen.

Geeignete Aminosilane für die Umsetzung mit dem Isocyanatgruppen-haltigen Polymer sind primäre oder sekundäre Aminosilane. Bevorzugt sind 3-Aminopropyltrimethoxysilan, 3-Aminopropyldimethoxymethylsilan, 4-Aminobutyl-trimethoxysilan, 4-Amino-3-methylbutyl-trimethoxysilan, 4-Amino-3,3-dimethylbutyl-trimethoxysilan, N-Butyl-3-aminopropyltrimethoxysilan, N-Phenyl-3-aminopropyltrimethoxysilan, Addukte aus primären Aminosilanen wie 3-Aminopropyltrimethoxysilan, 3-Aminopropyldimethoxymethylsilan oder N-(2-Aminoethyl)-3-aminopropyltrimethoxysilan und Michael-Akzeptoren wie Acrylnitril, (Meth)acrylsäureestern, (Meth)acrylsäureamiden, Maleinsäure- oder Fumarsäurediestern, Citraconsäurediestern oder Itaconsäurediestern, insbesondere N-(3-Trimethoxysilyl-propyl)aminobernsteinsäurediethylester oder N-(3-Dimethoxymethylsilylpropyl)-aminobernsteinsäurediethylester. Ebenfalls geeignet sind Analoga der genannten Aminosilane mit Ethoxygruppen anstelle der Methoxygruppen am Silicium.

Geeignete Mercaptosilane für die Umsetzung mit dem Isocyanatgruppen-haltigen Polymer sind insbesondere 3-Mercaptopropyltrimethoxysilan, 3-Mercaptopropyldimethoxymethylsilan oder Analoga dieser Mercaptosilane mit Ethoxy-gruppen anstelle der Methoxygruppen am Silicium.

Geeignete Hydroxysilane für die Umsetzung mit dem Isocyanatgruppen-haltigen Polymer sind insbesondere erhältlich aus der Addition von Aminosilanen an Lactone, Lactide oder an cyclische Carbonate.

Bevorzugte Hydroxysilane dieser Art sind N-(3-Triethoxysilylpropyl)-2-hydroxy-propanamid, N-(3-Trimethoxysilylpropyl)-2-hydroxypropanamid, N-(3-Triethoxy-silylpropyl)-4-hydroxypentanamid, N-(3-Triethoxysilylpropyl)-4-hydroxyoctanamid, N-(3-Triethoxysilylpropyl)-5-hydroxydecanamid oder N-(3-Triethoxysilylpropyl)-2-hydroxypropylcarbamat.

Weitere geeignete Hydroxysilane sind erhältlich aus der Addition von Amino-silanen an Epoxide oder aus der Addition von Aminen an Epoxysilane. Bevorzugte Hydroxysilane dieser Art sind 2-Morpholino-4(5)-(2-trimethoxysilyl-ethyl)cyclohexan-1-ol, 2-Morpholino-4(5)-(2-triethoxysilylethyl)cyclohexan-1-ol oder 1-Morpholino-3-(3-(triethoxysilyl)propoxy)propan-2-ol.

Am meisten bevorzugt für die Umsetzung mit dem Isocyanatgruppen-haltigen Polymer ist ein Aminosilan, insbesondere N-(3-Trimethoxysilylpropyl)aminobern-steinsäurediethylester, N-(3-Dimethoxymethylsilylpropyl)aminobernsteinsäuredi-ethylester oder N-(3-Triethoxysilylpropyl)aminobernsteinsäurediethylester.

Die Zusammensetzung umfasst weiterhin mindestens ein Epoxid-Flüssigharz. Als Epoxid-Flüssigharz geeignet sind übliche technische Epoxidharze, die bei Raumtemperatur fliessfähig sind und eine Glasübergangstemperatur unterhalb von 25°C aufweisen. Diese werden auf bekannte Art und Weise erhalten, insbesondere aus der Glycidylisierung von Verbindungen mit mindestens zwei aktiven Wasserstoffatomen, insbesondere Polyphenolen, Polyolen oder Aminen, durch Umsetzung mit Epichlorhydrin.

Geeignete Epoxid-Flüssigharze sind insbesondere aromatische Epoxid-Flüssigharze, insbesondere die Glycidylisierungsprodukte von:
- Bisphenol-A, Bisphenol-F oder Bisphenol-A/F, wobei A für Aceton und F für Formaldehyd steht, welche als Edukte zur Herstellung dieser Bisphenole dienten. Im Fall von Bisphenol-F können auch Stellungsisomere vorhanden sein, insbesondere abgeleitet von 2,4'- oder 2,2'-Hydroxyphenylmethan.
- Dihydroxybenzol-Derivaten wie Resorcin, Hydrochinon oder Brenzkatechin;
- weiteren Bisphenolen oder Polyphenolen wie Bis(4-hydroxy-3-methylphenyl)-methan, 2,2-Bis(4-hydroxy-3-methylphenyl)propan (Bisphenol-C), Bis(3,5-dimethyl-4-hydroxyphenyl)methan, 2,2-Bis(3,5-dimethyl-4-hydroxyphenyl)propan, 2,2-Bis(3,5-dibromo-4-hydroxyphenyl)propan, 2,2-Bis(4-hydroxy-3-tert.butylphenyl)propan, 2,2-Bis(4-hydroxyphenyl)butan (Bisphenol-B), 3,3-Bis(4-hydroxyphenyl)pentan, 3,4-Bis(4-hydroxyphenyl)hexan, 4,4-Bis(4-hydroxyphenyl)-heptan, 2,4-Bis(4-hydroxyphenyl)-2-methylbutan, 2,4-Bis(3,5-dimethyl-4-hydroxyphenyl)-2-methylbutan, 1,1-Bis(4-hydroxyphenyl)cyclohexan (Bisphenol-Z), 1,1-Bis(4-hydroxyphenyl)-3,3,5-trimethylcyclohexan (Bisphenol-TMC), 1,1-Bis(4-hydroxyphenyl)-1-phenylethan, 1,4-Bis[2-(4-hydroxyphenyl)-2-propyl]-benzol (Bisphenol-P), 1,3-Bis[2-(4-hydroxyphenyl)-2-propyl]benzol (Bisphenol-M), 4,4'-Dihydroxydiphenyl (DOD), 4,4'-Dihydroxybenzophenon, Bis(2-hydroxynaphth-1-yl)methan, Bis(4-hydroxynaphth-1-yl)methan, 1,5-Dihydroxynaphthalin, Tris(4-hydroxyphenyl)methan, 1,1,2,2-Tetrakis(4-hydroxyphenyl)ethan, Bis(4-hydroxyphenyl)ether oder Bis(4-hydroxyphenyl)sulfon;
- Kondensationsprodukten von Phenolen mit Formaldehyd, die unter sauren Bedingungen erhalten werden, wie Phenol-Novolaken oder Kresol-Novolaken, auch Bisphenol-F-Novolake genannt;
- aromatischen Aminen, wie Anilin, Toluidin, 4-Aminophenol, 4,4'-Methylendiphenyldiamin, 4,4'-Methylendiphenyldi-(N-methyl)amin, 4,4'-[1,4-Phenylen-bis(1-methylethyliden)]bisanilin (Bisanilin-P) oder 4,4'-[1,3-Phenylen-bis(1-methylethyliden)]bisanilin (Bisanilin-M).

Weitere geeignete Epoxid-Flüssigharze sind aliphatische oder cycloaliphatische Polyepoxide, insbesondere
- Glycidylether von gesättigten oder ungesättigten, verzweigten oder unverzweigten, cyklischen oder offenkettigen di-, tri- oder tetrafunktionellen C₂- bis C₃₀-Alkoholen, insbesondere Ethylenglykol, Propylenglykol, Butylenglykol, Hexandiol, Octandiol, Polypropylenglykolen, Dimethylolcyclohexan, Neopentylglykol, Dibromoneopentylglykol, Rizinusöl, Trimethylolpropan, Trimethylolethan, Pentaerythrol, Sorbit oder Glycerin, oder alkoxyliertes Glycerin oder alkoxyliertes Trimethylolpropan;
- ein hydriertes Bisphenol-A-, -F- oder -A/F-Flüssigharz, beziehungsweise die Glycidylisierungsprodukte von hydriertem Bisphenol-A, -F oder -A/F;
- ein N-Glycidylderivat von Amiden oder heterocyclischen Stickstoffbasen, wie Triglycidylcyanurat oder Triglycidylisocyanurat, oder Umsetzungsprodukte von Epichlorhydrin mit Hydantoin.
- Epoxidharze aus der Oxidation von Olefinen, wie insbesondere Vinylcylohexen, Dicyclopentadien, Cyclohexadien, Cyclododecadien, Cyclododecatrien, Isopren, 1,5-Hexadien, Butadien, Polybutadien oder Divinylbenzol.

Bevorzugt ist ein Epoxid-Flüssigharz auf der Basis eines Bisphenols.

Besonders bevorzugt ist ein Epoxid-Flüssigharz auf der Basis eines Bisphenol-A-, Bisphenol-F- oder Bisphenol-A/F-Diglycidylethers, wie sie kommerziell beispielsweise von Dow, Huntsman oder Momentive erhältlich sind. Diese Epoxid-Flüssigharze weisen eine gut handhabbare Viskosität auf und ermöglichen hohe Festigkeiten und Beständigkeiten. Solche Flüssigharze können auch Anteile von Bisphenol A-Festharz oder Phenol-Novolaken enthalten.

Bevorzugt liegt in der Zusammensetzung das Gewichtsverhältnis zwischen Silangruppen-haltigem Polymer und Epoxid-Flüssigharz im Bereich von 20/80 bis 70/30, insbesondere 25/75 bis 50/50. Eine solche Zusammensetzung weist eine hohe Festigkeit bei guter Dehnbarkeit auf.

Die Zusammensetzung umfasst weiterhin mindestens ein Polyamin mit mindestens drei gegenüber Epoxidgruppen reaktiven Aminwasserstoffen.

Geeignete sind insbesondere die folgenden Polyamine:
- aliphatische, cycloaliphatische oder arylaliphatische primäre Diamine, insbesondere 2,2-Dimethyl-1,3-propandiamin, 1,3-Pentandiamin (DAMP), 1,5-Pentandiamin, 1,5-Diamino-2-methylpentan (MPMD), 2-Butyl-2-ethyl-1,5-pentandiamin (C11-Neodiamin), 1,6-Hexandiamin, 2,5-Dimethyl-1,6-hexandiamin, 2,2(4),4-Trimethylhexamethylendiamin (TMD), 1,7-Heptandiamin, 1,8-Octandiamin, 1,9-Nonandiamin, 1,10-Decandiamin, 1,11-Undecandiamin, 1,12-Dodecandiamin, 1,2-, 1,3- oder 1,4-Diaminocyclohexan, 1,3-Bis(aminomethyl)-cyclohexan, 1,4-Bis(aminomethyl)cyclohexan, 1-Amino-3-aminomethyl-3,5,5-trimethylcyclohexan (Isophorondiamin oder IPDA), 2(4)-Methyl-1,3-diaminocyclohexan, Bis(4-aminocyclohexyl)methan, Bis(4-amino-3-methylcyclohexyl)-methan, Bis(4-amino-3-ethylcyclohexyl)methan, Bis(4-amino-3,5-dimethylcyclohexyl)methan, Bis(4-amino-3-ethyl-5-methylcyclohexyl)methan, 2,5(2,6)-Bis-(aminomethyl)bicyclo[2.2.1]heptan (NBDA), 3(4),8(9)-Bis(aminomethyl)tricyclo-[5.2.1.0^{2,6}]decan, 1,4-Diamino-2,2,6-trimethylcyclohexan (TMCDA), 1,8-Menthandiamin, 1,3-Bis(aminomethyl)benzol (MXDA) oder 1,4-Bis(aminomethyl)-benzol;
- Ethergruppen-haltige aliphatische primäre Di- oder Triamine, insbesondere 3,6-Dioxaoctan-1,8-diamin, 4,7-Dioxadecan-1,10-diamin, 4,7-Dioxadecan-2,9-diamin, 4,9-Dioxadodecan-1,12-diamin, 5,8-Dioxadodecan-3,10-diamin, 4,7,10-Trioxatridecan-1,13-diamin oder höhere Oligomere dieser Diamine, Bis(3-aminopropyl)polytetrahydrofurane oder andere Polytetrahydrofurandiamine, 3,9-Bis(3-aminopropyl)-2,4,8,10-tetraoxaspiro[5.5]undecan, cycloaliphatische Ethergruppen-haltige Diamine aus der Propoxylierung und nachfolgenden Aminierung von 1,4-Dimethylolcyclohexan, erhältlich insbesondere als Jeffamine^{®} RFD-270 (von Huntsman), oder Polyoxyalkylendi- oder -triamine, insbesondere Jeffamine^{®} D-230, Jeffamine^{®} D-400, Jeffamine^{®} D-2000, Jeffamine^{®} EDR-104, Jeffamine^{®} EDR-148, Jeffamine^{®} EDR-176, Jeffamine^{®} T-403, Jeffamine^{®} T-3000, Jeffamine^{®} T-5000 (alle von Huntsman), oder entsprechende Amine von BASF oder Nitroil;
- sekundäre Aminogruppen aufweisende Polyamine mit zwei primären Aminogruppen, wie insbesondere 3-(2-Aminoethyl)aminopropylamin, Bis(hexamethylen)triamin (BHMT), Diethylentriamin (DETA), Triethylentetramin (TETA), Tetraethylenpentamin (TEPA), Pentaethylenhexamin (PEHA) oder höhere Homologe linearer Polyethylenamine, Dipropylentriamin (DPTA), N-(2-Aminoethyl)-1,3-propandiamin (N3-Amin), N,N'-Bis(3-aminopropyl)ethylendiamin (N4-Amin), N,N'-Bis(3-aminopropyl)-1,4-diaminobutan, N5-(3-Aminopropyl)-2-methyl-1,5-pentandiamin, N3-(3-Aminopentyl)-1,3-pentandiamin, N5-(3-Amino-1-ethylpropyl)-2-methyl-1,5-pentandiamin oder N,N'-Bis(3-amino-1-ethylpropyl)-2-methyl-1,5-pentandiamin;

- tertiäre Aminogruppen aufweisende Polyamine, wie insbesondere 2-Aminoethylpiperazin, 3-Dimethylaminopropylamin (DMAPA), N,N-Dimethyldi(1,3-propylen)triamin (DMAPAPA), N,N'-Bis(aminoethyl)piperazin, N,N'-Bis(aminopropyl)piperazin, N,N-Bis(3-aminopropyl)methylamin, N,N-Bis(3-aminopropyl)-ethylamin;
- aliphatische, cycloaliphatische oder arylaliphatische primäre Triamine, insbesondere 4-Aminomethyl-1,8-octandiamin, 1,3,5-Tris(aminomethyl)benzol, 1,3,5-Tris(aminomethyl)cyclohexan, Tris(2-aminoethyl)amin, Tris(2-aminopropyl)amin oder Tris(3-aminopropyl)amin; oder
- Diamine mit einer primären und einer sekundären Aminogruppe, insbesondere Produkte aus der reduktiven Alkylierung von primären aliphatischen Polyaminen mit Aldehyden oder Ketonen, wie insbesondere N-Benzyl-1,2-ethandiamin, N-Benzyl-1,2-propandiamin, N-Benzyl-1,3-bis(aminomethyl)benzol, N-2-Ethylhexyl-1,3-bis(aminomethyl)benzol, N-(2-Phenylethyl)-1,3-bis(aminomethyl)-benzol (Bestandteil von styrolisiertem 1,3-Bis(aminomethyl)benzol, erhältlich als Gaskamine^{®} 240 von Mitsubishi Gas Chemical); oder
- Addukte der genannten Amine oder von kleinen Aminen wie insbesondere 1,2-Ethandiamin oder 1,2-Propandiamin mit Mono- oder Diepoxiden, insbesondere mit Kresylglycidylether oder Bisphenol-A Diglycidylether; oder
- Polyamidoamine, insbesondere Umsetzungsprodukte aus einer ein- oder mehrwertigen Carbonsäure oder deren Ester oder Anhydrid, insbesondere einer Dimerfettsäure, mit einem im stöchiometrischen Überschuss eingesetzten Polyamin, insbesondere einem Polyalkylenamin wie beispielsweise DETA oder TETA; oder
- Mannich-Basen, insbesondere Phenalkamine, also Umsetzungsprodukte von Phenolen, insbesondere Cardanol, mit Aldehyden, insbesondere Formaldehyd, und Polyaminen.

Bevorzugt sind aliphatische, cycloaliphatische oder arylaliphatische Polyamine.

Bevorzugt sind Polyamine ausgewählt aus der Gruppe bestehend aus MPMD, TMD, 1,2-Diaminocyclohexan, 1,3-Diaminocyclohexan, 1,4-Diaminocyclohexan, 1,3-Bis(aminomethyl)cyclohexan, 1,4-Bis(aminomethyl)cyclohexan, IPDA, 2(4)-Methyl-1,3-diaminocyclohexan, Bis(4-aminocyclohexyl)methan, NBDA, MXDA, Polyoxypropylendiaminen und Polyoxypropylentriaminen mit mittlerem Molekulargewicht Mₙ im Bereich von 200 bis 500 g/mol, BHMT, TETA, TEPA, N4-Amin, DMAPAPA, N-Benzyl-1,2-ethandiamin, N-Benzyl-1,2-propandiamin, N-Benzyl-1,3-bis(aminomethyl)benzol, N-(2-Phenylethyl)-1,3-bis(aminomethyl)benzol und dem Addukt von MPMD oder 1,2-Propandiamin mit Kresylglycidylether.

Davon besonders bevorzugt ist 1,2-Diaminocyclohexan. Damit werden besonders hohe Festigkeiten erhalten.

Davon weiterhin besonders bevorzugt ist IPDA. Damit werden besonders kostengünstige Zusammensetzungen mit hoher Festigkeit erhalten.

Davon weiterhin besonders bevorzugt sind Polyoxypropylendi- oder -triamine mit mittlerem Molekulargewicht Mₙ im Bereich von 200 bis 500 g/mol, insbesondere Jeffamine^{®} D-230, Jeffamine^{®} D-400 oder Jeffamine^{®} T-403. Damit werden besonders hohe Dehnungen erhalten.

Davon weiterhin besonders bevorzugt ist das Addukt von 1,2-Propandiamin mit Kresylglycidylether, insbesondere ortho-Kresylglycidylether, wobei die Adduktierung bevorzugt mit einem Überschuss an 1,2-Propandiamin gegenüber dem Kresylglycidylether durchgeführt und das nicht adduktierte 1,2-Propandiamin nach der Umsetzung mittels Destillation entfernt wird. Damit werden auch bei feuchten Bedingungen glänzende Oberflächen erhalten.

Es kann vorteilhaft sein, eine Mischung von zwei oder mehr Polyaminen einzusetzen. Bevorzugt sind Mischungen enthaltend mindestens ein Polyoxypropylendi- oder -triamin und mindestens ein weiteres Polyamin.

Bevorzugt liegt das Polyamin oder die Mischung von zwei oder mehr Polyaminen in einer solchen Menge vor, dass das Verhältnis der Anzahl Aminwasserstoffe zur Anzahl Epoxidgruppen im Bereich von 0.5 / 1 bis 1.5 / 1, insbesondere 0.8 / 1 bis 1.2 / 1, liegt.

Die erfindungsgemässe Zusammensetzung ist bevorzugt eine zweikomponentige Zusammensetzung und umfasst eine erste und eine zweiten Komponente, welche voneinander getrennt herstellt, verpackt und gelagert werden, wobei das Polyamin nicht in der gleichen Komponente wie das Epoxid-Flüssigharz vorliegt.

In einer bevorzugten Ausführungsform der Erfindung umfasst die Zusammensetzung eine erste Komponente enthaltend
- mindestens ein Silangruppen-haltiges Polymer, wie vorgängig beschrieben,
   und
- mindestens ein Epoxid-Flüssigharz,
   und eine zweite Komponente enthaltend
- mindestens ein Polyamin mit mindestens drei gegenüber Epoxidgruppen reaktiven Aminwasserstoffen.

In einer weiteren bevorzugten Ausführungsform der Erfindung umfasst die Zusammensetzung eine erste Komponente enthaltend
- mindestens ein Silangruppen-haltiges Polymer, wie vorgängig beschrieben,
   und
- mindestens ein Polyamin mit mindestens drei gegenüber Epoxidgruppen reaktiven Aminwasserstoffen,
   und eine zweite Komponente enthaltend
- mindestens ein Epoxid-Flüssigharz.

Bei beiden Ausführungsformen sind die Komponenten für sich allein unter Ausschluss von Feuchtigkeit lagerstabil. Beim Vermischen der beiden Komponenten reagieren primäre und/oder sekundäre Aminogruppen mit vorhandenen Epoxidgruppen. Silangruppen reagieren unter Freisetzung von Alkohol, wenn sie mit Wasser in Kontakt kommen.

Die Zusammensetzung enthält bevorzugt zusätzlich mindestens einen weiteren Bestandteil ausgewählt aus Aminosilanen, Trocknungsmitteln, Beschleunigern, Wasser, Füllstoffen und Weichmachern.

Geeignete Aminosilane sind insbesondere 3-Aminopropyltrimethoxysilan, N-(2-Aminoethyl)-3-aminopropyltrimethoxysilan, N-(2-Aminoethyl)-N'-[3-(trimethoxysilyl)propyl]ethylendiamin, sowie deren Analoga mit Ethoxygruppen anstelle der Methoxygruppen am Silicium.

Das Aminosilan ist geeigneterweise in der gleichen Komponente wie das Polyamin.

Bevorzugt weist die Zusammensetzung einen Gehalt an Aminosilan im Bereich von 0.1 bis 5 Gewichts-%, insbesondere im Bereich von 0.2 bis 2 Gewichts-%, auf. Solche Zusammensetzungen weisen eine besonders hohe Festigkeit auf.

Geeignete Trockungsmittel sind insbesondere Tetraethoxysilan, Vinyltrimethoxysilan, Vinyltriethoxysilan, Organosilane, welche in α-Stellung zur Silangruppe eine funktionelle Gruppe aufweisen, insbesondere N-(Methyldimethoxysilylmethyl)-O-methylcarbamat oder (Methacryloxymethyl)silane, Methoxymethylsilane, Orthoameisensäureester, sowie Calciumoxid oder Molekularsiebe.

Besonders bevorzugt enthält die Zusammensetzung Vinyltrimethoxysilan oder Vinyltriethoxysilan. Dabei ist Vinyltrimethoxysilan für den Fall bevorzugt, dass das Silangruppen-haltige Polymer Methoxysilangruppen aufweist, während Vinyltriethoxysilan für den Fall bevorzugt ist, dass das Silangruppen-haltige Polymer Ethoxysilangruppen aufweist.

Das Trockungsmittel ist geeigneterweise in der gleichen Komponente wie das Silangruppen-haltige Polymer.

Geeignete Beschleuniger sind insbesondere Substanzen, welche die Vernetzung von Silangruppen-haltigen Polymeren beschleunigen. Dafür geeignet sind insbesondere Metallkatalysatoren und/oder stickstoffhaltige Verbindungen.

Geeignete Metallkatalysatoren sind Verbindungen von Titan, Zirkonium, Aluminium oder Zinn, insbesondere Organozinn-Verbindungen, Organotitanate, Organozirkonate oder Organoaluminate, wobei diese Metallkatalysatoren insbesondere Alkoxygruppen, Aminoalkoxygruppen, Sulfonatgruppen, Carboxylgruppen, 1,3-Diketonatgruppen, 1,3-Ketoesteratgruppen, Dialkylphosphatgruppen oder Dialkylpyrophosphatgruppen aufweisen. Besonders geeignet sind Dibutylzinnoxid, Dibutylzinndichlorid, Dibutylzinndiacetat, Dibutylzinndilaurat, Dibutylzinndiacetylacetonat, Dioctylzinnoxid, Dioctylzinndichlorid, Dioctylzinndiacetat, Dioctylzinndilaurat oder Dioctylzinndiacetylacetonat, sowie Organotitanate oder Organozirkonate.

Geeignete stickstoffhaltige Verbindungen sind insbesondere Amidine wie 1,8-Diazabicyclo[5.4.0]undec-7-en (DBU), 1,5-Diazabicyclo[4.3.0]non-5-en (DBN), 6-Dibutylamino-1,8-diazabicyclo[5.4.0]undec-7-en, oder Guanidine wie Tetramethylguanidin, 2-Guanidinobenzimidazol, Acetylacetonguanidin oder Umsetzungsprodukte aus Carbodiimiden und Aminen wie insbesondere Polyetheraminen oder Aminosilanen.

Geeignete Beschleuniger sind weiterhin insbesondere Substanzen, welche die Reaktion von Epoxidgruppen mit Aminogruppen beschleunigen. Dafür geeignet sind insbesondere Säuren oder zu Säuren hydrolysierbare Verbindungen, insbesondere organische Carbonsäuren wie Salicylsäure, organische Sulfonsäuren wie p-Toluolsulfonsäure, Sulfonsäureester, Phosphorsäure, oder Nitrate wie insbesondere Calciumnitrat, oder tertiäre Amine wie insbesondere 1,4-Diazabicyclo-[2.2.2]octan, Triethanolamin, Imidazole wie insbesondere N-Methylimidazol, N-Vinylimidazol oder 1,2-Dimethylimidazol, die genannten Amidine oder Guanidine, Phenole oder Mannich-Basen wie insbesondere 2,4,6-Tris(dimethylaminomethyl)-phenol, oder Mercaptogruppen aufweisende Verbindungen.

Bevorzugt enthält die Zusammensetzung mindestens einen Beschleuniger ausgewählt aus Dialkylzinnverbindungen, Organotitananten, Amidinen, Guanidinen, Säuren, Calciumnitrat und Mannich-Basen.

Besonders bevorzugt enthält die Zusammensetzung 2,4,6-Tris(dimethylaminomethyl)phenol und mindestens einen weiteren Beschleuniger.

In einer bevorzugten Ausführungsform der Erfindung enthält die Zusammensetzung Wasser oder eine Wasser freisetzende Substanz. Eine solche Zusammensetzung weist den Vorteil auf, dass das zur Vernetzung der Silangruppen notwendige Wasser nicht oder nur zum Teil aus der Umgebung aufgenommen werden muss.

Bevorzugt enthält die Zusammensetzung gesamthaft bis zu 5 Gewichts-%, insbesondere bis zu 2 Gewichts-%, freies oder freisetzbares Wasser.

Freies Wasser ist geeigneterweise nicht in der gleichen Komponente wie das Silangruppen-haltige Polymer.

Geeignete Füllstoffe sind insbesondere gemahlene oder gefällte Calciumcarbonate, welche gegebenenfalls mit Fettsäuren, insbesondere Stearaten, beschichtet sind, Baryte (Schwerspate), Quarzmehle, Quarzsande, Dolomite, Wollastonite, calcinierte Kaoline, Schichtsilikate wie Glimmer oder Talk, Zeolithe, Aluminiumhydroxide, Magnesiumhydroxide, Kieselsäuren inklusive hochdisperse Kieselsäuren aus Pyrolyseprozessen, Zemente, Gipse, Flugaschen, industriell hergestellte Russe, Graphit, Metall-Pulver, beispielsweise von Aluminium, Kupfer, Eisen, Silber oder Stahl, PVC-Pulver oder Leichtfüllstoffe wie Glashohlkugeln oder gasgefüllte Kunststoffhohlkugeln (microspheres), insbesondere die unter dem Handelsnamen Expancel^{®} (von Akzo Nobel) erhältlichen Typen.

Bevorzugt sind Calciumcarbonate, calcinierte Kaoline, hochdisperse Kieselsäuren oder industriell hergestellte Russe.

Geeignete Weichmacher sind insbesondere Carbonsäureester wie Phthalate, insbesondere Diisononylphthalat (DINP), Diisodecylphthalat (DIDP) oder Di(2-propylheptyl)phthalat (DPHP), hydrierte Phthalate bzw. 1,2-Cyclohexandicarbonsäureester, insbesondere hydriertes Diisononylphthalat bzw. Diisononyl-1,2-cyclohexandicarboxylat (DINCH), Terephthalate, insbesondere Bis(2-ethylhexyl)terephthalat (DOTP) oder Diisononylterephthalat (DINT), hydrierte Terephthalate bzw. 1,4-Cyclohexandicarbonsäureester, insbesondere hydriertes Bis(2-ethylhexyl)terephthalat bzw. Bis(2-ethylhexyl)-1,4-cyclohexandicarboxylat oder hydriertes Diisononylterephthalat bzw. Diisononyl-1,4-cyclohexandicarboxylat, Isophthalate, Trimellitate, Adipate, insbesondere Dioctyladipat, Azelate, Sebacate, Benzoate, Glykolether, Glykolester wie insbesondere Triethylenglykol-bis(2-ethyl-hexanoat), Weichmacher mit Polyetherstruktur, insbesondere Polypropylenoxidmonole, -diole oder -triole mit blockierten Hydroxylgruppen, insbesondere in der Form von Acetatgruppen, organische Phosphor- oder Sulfonsäureester, Polybutene, Polyisobutene oder von natürlichen Fetten oder Ölen abgeleitete Weichmacher, insbesondere epoxidiertes Soja- oder Leinöl.

Bevorzugte Weichmacher sind Phthalate, Glykolester oder Weichmacher mit Polyetherstruktur.

Die erfindungsgemässe Zusammensetzung kann weitere Zusätze enthalten, insbesondere
- weitere Vernetzer, insbesondere weitere Silane wie Epoxysilane oder Mercaptosilane, oder Mercaptogruppen aufweisende Verbindungen wie zum Beispiel Mercaptan-terminierte Polysulfid-Polymere oder Mercaptan-terminierte Polyoxyalkylen-Ether;
- Lösemittel oder Verdünner;
- anorganische oder organische Pigmente, insbesondere Titandioxid, Chromoxide oder Eisenoxide;
- Farbstoffe;
- Rheologie-Modifizierer, insbesondere Verdickungsmittel, insbesondere Schichtsilikate wie Bentonite, Derivate von Rizinusöl, hydriertes Rizinusöl, Polyamide, Polyurethane, Harnstoffverbindungen, Polyvinylchloride, pyrogene Kieselsäuren, Celluloseether oder hydrophob modifizierte Polyoxyethylene;
- natürliche Harze, Fette oder Öle wie Kolophonium, Schellack, Leinöl, Rizinusöl oder Sojaöl;
- nicht-reaktive Polymere, insbesondere Homo- oder Copolymere von ungesättigten Monomeren, insbesondere aus der Gruppe umfassend Ethylen, Propylen, Butylen, Isobutylen, Isopren, Vinylacetat oder Alkyl(meth)acrylate, insbesondere Polyethylene (PE), Polypropylene (PP), Polyisobutylene, Ethylenvinylacetat-Copolymere (EVA) oder ataktische Poly-α-Olefine (APAO);
- Fasern, insbesondere Glasfasern, Kohlefasern, Metallfasern, Keramikfasern, Polymerfasern wie Polyamidfasern oder Polyethylenfasern, oder Naturfasern wie Wolle, Cellulose, Hanf oder Sisal;
- Nanofüllstoffe wie Graphen oder Carbon Nanotubes;
- flammhemmende Substanzen, insbesondere die bereits genannten Füllstoffe Aluminiumhydroxid oder Magnesiumhydroxid, sowie insbesondere organische Phosphorsäureester wie insbesondere Triethylphosphat, Trikresylphosphat, Triphenylphosphat, Diphenylkresylphosphat, Isodecyldiphenylphosphat, Tris-(1,3-dichlor-2-propyl)phosphat, Tris(2-chlorethyl)phosphat, Tris(2-ethylhexyl)-phosphat, Tris(chlorisopropyl)phosphat, Tris(chlorpropyl)phosphat, isopropyliertes Triphenylphosphat, Mono-, Bis- oder Tris(isopropylphenyl)phosphate unterschiedlichen Isopropylierungsgrades, Resorcinol-bis(diphenylphosphat), Bisphenol-A-bis(diphenylphosphat) oder Ammoniumpolyphosphate;
- Additive, insbesondere Emulgatoren, Netzmittel, Verlaufmittel, Entschäumer, Entlüfter, Stabilisatoren gegen Oxidation, Wärme, Licht oder UV-Strahlung oder Biozide.

Es kann sinnvoll sein, gewisse Bestandteile vor dem Einmischen in die Zusammensetzung chemisch oder physikalisch zu trocknen, insbesondere wenn sie zusammen mit dem Silangruppen-haltigen Polymer gelagert werden.

Bevorzugt enthält die erfindungsgemässe Zusammensetzung wenig Lösemittel. Insbesondere enthält sie weniger als 5 Gewichts-%, bevorzugt weniger als 2.5 Gewichts-%, Lösemittel. Am meisten bevorzugt ist sie im Wesentlichen frei von Lösemitteln.

Bevorzugt weist die erfindungsgemässe Zusammensetzung einen Gehalt an Silangruppen-haltigem Polymer im Bereich von 10 bis 50 Gewichts-%, insbesondere 12 bis 40 Gewichts-%, auf.

Bevorzugt weist die erfindungsgemässe Zusammensetzung einen Gehalt an Epoxid-Flüssigharz im Bereich von 10 bis 60 Gewichts-%, insbesondere 20 bis 50 Gewichts-%, auf.

Bevorzugt weist die erfindungsgemässe Zusammensetzung einen Gehalt an der Summe aus Epoxid-Flüssigharz und Epoxidgruppen-haltigem Reaktivverdünner im Bereich von 20 bis 70 Gewichts-%, insbesondere 25 bis 65 Gewichts-%, auf.

Bevorzugt enthält die erfindungsgemässe Zusammensetzung
- 12 bis 40 Gewichts-% Silangruppen-haltiges Polymer,
- 20 bis 50 Gewichts-% Epoxid-Flüssigharz,
- 0 bis 20 Gewichts-% Epoxidgruppen-haltiger Reaktivverdünner,
- 5 bis 40 Gewichts-% Polyamine,
- 0 bis 50 Gewichts-% Füllstoffe,
und gegebenenfalls weitere Inhaltsstoffe.

Die erfindungsgemässe Zusammensetzung wird bevorzugt als zweikomponentige Zusammensetzung hergestellt und eingesetzt. Dabei werden die erste und die zweite Komponente der Zusammensetzung getrennt voneinander hergestellt und in einem feuchtigkeitsdichten Gebinde gelagert. Ein geeignetes Gebinde ist insbesondere ein Fass, ein Hobbock, ein Beutel, ein Eimer, eine Dose, eine Kartusche oder eine Tube.

Zur Anwendung der beschriebenen Zusammensetzung werden die beiden Komponenten kurz vor oder während der Applikation miteinander vermischt. Das Mischungsverhältnis wird dabei bevorzugt so gewählt, dass die gegenüber Epoxidgruppen reaktiven Gruppen in einem geeigneten Verhältnis zu den Epoxidgruppen stehen, wie vorgängig beschrieben. In Gewichtsteilen liegt das Mischungsverhältnis üblicherweise im Bereich von 1:10 bis 10:1.

Das Vermischen der beiden Komponenten erfolgt mittels eines geeigneten Verfahrens; es kann kontinuierlich oder batchweise erfolgen, über einen Statikmischer oder mit Hilfe eines dynamischen Mischers. Falls das Vermischen vor der Applikation erfolgt, muss darauf geachtet werden, dass die Applikation innerhalb der Topfzeit der Zusammensetzung erfolgt, da es sonst zu Störungen, wie beispielsweise einem verlangsamten oder unvollständigen Aufbau der Haftung zum Substrat oder vorzeitigem Gelieren, kommen kann.

Als "Topfzeit" wird dabei die Zeit bezeichnet, innerhalb welcher die Zusammensetzung nach dem Vermischen der Komponenten appliziert sein soll.

Das Vermischen der Komponenten erfolgt bevorzugt bei Umgebungstemperatur, welche typischerweise im Bereich von etwa 0 bis 50°C, bevorzugt bei etwa 5 bis 35°C, liegt.

Mit dem Vermischen der beiden Komponenten beginnt die Aushärtung durch chemische Reaktion. Dabei reagieren Epoxidgruppen mit Aminwasserstoffen, und Silangruppen hydrolysieren unter Freisetzung von Alkohol, wobei Silanolgruppen (Si-OH-Gruppen) und durch nachfolgende Kondensationsreaktionen Siloxangruppen (Si-O-Si-Gruppen) gebildet werden. Als Ergebnis dieser und gegebenenfalls weiterer Reaktionen härtet die Zusammensetzung zu einem vernetzten Kunststoff aus. Falls das Wasser für die Hydrolyse der Silangruppen nicht bereits in der Zusammensetzung vorhanden war, kann es aus der Luft (Luftfeuchtigkeit) oder einem Substrat stammen, oder die Zusammensetzung kann mit einer Wasser enthaltenden Komponente in Kontakt gebracht werden, zum Beispiel durch Bestreichen, Besprühen oder Einmischen.

Die Aushärtung erfolgt insbesondere bei einer Temperatur im Bereich von 0 bis 150°C. Sie kann insbesondere bei Umgebungstemperatur erfolgen, wobei sie sich typischerweise über einige Tage bis Wochen erstreckt, bis sie unter den gegebenen Bedingungen weitgehend abgeschlossen ist. In gewissen Fällen kann es vorteilhaft sein, eine bei Umgebungstemperatur teilgehärtete Zusammensetzung bei einer erhöhten Temperatur nachzuhärten.

Die Applikation der beschriebenen Zusammensetzung erfolgt auf mindestens ein Substrat, wobei die Folgenden besonders geeignet sind:
- Metalle oder Legierungen wie Aluminium, Eisen, Stahl, Kupfer, weitere Buntmetalle, inklusive oberflächenveredelte Metalle oder Legierungen wie verzinkte oder verchromte Metalle;
- Beton, Mörtel, Zementestrich, Faserzement, Backstein, Ziegel, Gips oder Natursteine wie Granit oder Marmor;
- Asphalt oder Bitumen;
- beschichtete oder lackierte Substrate, insbesondere lackierte Fliesen, gestrichener Beton, pulverbeschichtete Metalle oder Legierungen oder lackierte Bleche;
- Reparatur- oder Nivelliermassen auf Basis PCC (Polymer-modifizierter Zementmörtel) oder ECC (Epoxidharz-modifizierter Zementmörtel);
- Leder, Textilien, Papier, Holz, mit Harzen, beispielsweise Phenol-, Melamin- oder Epoxidharzen, gebundene Holzwerkstoffe, Harz-Textil-Verbundwerkstoffe oder weitere sogenannte Polymer-Composites;
- Kunststoffe wie Hart- und Weich-PVC, Polycarbonat, Polystyrol, Polyester, Polyamid, PMMA, ABS, SAN, Epoxidharze, Phenolharze, PUR, POM, TPO, PE, PP, EPM oder EPDM, jeweils unbehandelt oder oberflächenbehandelt, beispielsweise mittels Plasma, Corona oder Flammen;
- Faserverstärkte Kunststoffe, wie Kohlefaser-verstärkte Kunststoffe (CFK), Glasfaser-verstärkte Kunststoffe (GFK) und Sheet Moulding Compounds (SMC);
- Glas oder Glaskeramik;
- Isolierschäume, insbesondere aus EPS, XPS, PUR, PIR, Steinwolle, Glaswolle oder geschäumtem Glas (Foamglas).

Die Substrate können bei Bedarf vor dem Applizieren vorbehandelt werden, insbesondere durch physikalische und/oder chemische Reinigungsverfahren oder das Aufbringen eines Aktivators oder eines Primers.

Aus der Aushärtung der beschriebenen Zusammensetzung wird eine ausgehärtete Zusammensetzung erhalten.

Die ausgehärtete Zusammensetzung weist eine sehr hohe Festigkeit, eine hohe Dehnbarkeit und einen hohen Weiterreisswiderstand auf.

Insbesondere verfügt sie über eine Zugfestigkeit von mindestens 15 MPa, bevorzugt mindestens 20 MPa, und eine Bruchdehnung von mindestens 10%, bevorzugt mindestens 15%, insbesondere mindestens 20%, am meisten bevorzugt mindestens 25%, bestimmt an hantelförmigen Prüfkörpern mit einer Länge von 75 mm, Steglänge von 30 mm, Stegbreite von 4 mm und Dicke von etwa 2 mm, in Anlehnung an DIN EN 53504 beschrieben bei einer Zuggeschwindigkeit von 2 mm/min.

Insbesondere verfügt sie über einen Weiterreisswiderstand von mindestens 10 N/mm, bevorzugt mindestens 15 N/mm, insbesondere mindestens 20 N/mm, bestimmt in Anlehnung an DIN ISO 34 bei einer Zuggeschwindigkeit von 500 mm/min.

Weiterhin verfügt die Zusammensetzung über eine hohe Beständigkeit gegenüber Wärme, Licht und Hydrolyse. Insbesondere verfügt die Zusammensetzung auch über eine hohe Beständigkeit gegenüber Glykol/Wasser Mischungen, wie sie als Kühlflüssigkeit bzw. Kühlerschutzmittel in Automobilen oder Batterien von Elektrofahrzeugen eingesetzt werden, beispielsweise eine Mischung aus 50 Gewichts-% Glysantin^{®} G64^{®} Konzentrat (von BASF) und 50 Gewichts-% Wasser.

Weiterhin verfügt die Zusammensetzung über sehr hohe Haftkräfte auf diversen Substraten, insbesondere auch auf nassen oder feuchten Substraten. Insbesondere können Metalle wie Aluminium oder Stahl mit der erfindungsgemässen Zusammensetzung ohne Primer verklebt werden, wobei die Verklebung sehr beständig ist gegenüber Korrosion, beispielsweise bei Salzwasserbelastung. Zudem können Beton, Asphalt oder Bitumen ohne Primer dauerhaft verklebt werden, auch unter feuchten oder nassen Bedingungen.

Weiterhin verfügt die Zusammensetzung über eine korrosionsschützende Wirkung bei Verwendung auf Metallen wie Aluminium oder Stahl.

Die Zusammensetzung ist insbesondere auch dann vorteilhaft, wenn aus Gründen des Arbeits- und Gesundheitsschutzes isocyanatfreie Produkte eingesetzt werden sollen.

Die beschriebene Zusammensetzung wird bevorzugt verwendet als Klebstoff, Dichtstoff, Beschichtung oder Vergussmasse, insbesondere auf mindestens einem Metall wie insbesondere Stahl oder Aluminium, bevorzugt Aluminium.

Bei der Verwendung auf mindestens einem Metall besteht der Vorteil, dass das Metall durch die Zusammensetzung vor Korrosion geschützt ist. Somit wird die Haftung auch bei Belastung mit beispielsweise Salzwasser nicht durch Metallkorrosion geschwächt. Insbesondere kann uneloxiertes Aluminium ohne Verwendung eines Primers verklebt werden, wobei die Haftung auch bei Salzwasserbelastung nicht durch Korrosion geschwächt wird.

Besonders bevorzugt wird die beschriebene Zusammensetzung verwendet als zähelastischer Klebstoff. Typischerweise weist sie dabei nach dem Vermischen der Komponenten eine flüssige oder pastöse Konsistenz mit strukturviskosen Eigenschaften auf. Bei der Applikation wird der vermischte Klebstoff innerhalb der Topfzeit auf mindestens eines der zu verklebenden Substrate aufgetragen und die Substrate innerhalb der Offenzeit des Klebstoffs zu einer Verklebung gefügt.

Als "Offenzeit" eines Klebstoffs wird die für eine kraftschlüssige Verbindung maximal mögliche Zeitspanne zwischen der Applikation des Klebstoffs und dem Fügen der zu verklebenden Teile bezeichnet.

Der vermischte Klebstoff wird insbesondere mittels Pinsel, Rolle, Spatel, Rakel, Kelle, oder aus einer Tube, Kartusche oder Dosiervorrichtung appliziert bzw. aufgetragen.

Der Klebstoff ist besonders geeignet für Verwendungen in der Bauindustrie oder für das Verkleben von Bauteilen in der Fertigungsindustrie.

Eine bevorzugte Verwendung ist das Verkleben von Batterieboxen, insbesondere von Elektrofahrzeugen. Dabei ist die hohe Festigkeit bei hoher Dehnbarkeit, die hohe Haftkraft und die hohe Beständigkeit, insbesondere auch gegenüber Glykol/Wasser Mischungen, wie sie als Kühlflüssigkeit für solche Batterien eingesetzt werden, vorteilhaft. Dabei werden insbesondere Bauteile aus Aluminium verklebt, wobei die korrosionsbeständige Haftung unter Salzwasserbelastung besonders vorteilhaft ist.

Ein weiterer Gegenstand der Erfindung ist somit ein Verfahren zum Verkleben, dadurch gekennzeichnet, dass die vermischte Zusammensetzung innerhalb der Topfzeit auf mindestens eines der zu verklebenden Substrate appliziert wird und die Substrate innerhalb der Offenzeit zu einer Verklebung gefügt werden, gefolgt von der Aushärtung der vermischten Zusammensetzung. Bevorzugt ist dabei mindestens eines der Substrate ein Metall, insbesondere Aluminium oder Stahl, besonders bevorzugt Aluminium.

Bevorzugt wird die beschriebene Zusammensetzung weiterhin verwendet als Beschichtung, insbesondere als Beschichtung für Metalle wie insbesondere Stahl oder Aluminium, wobei die Zusammensetzung das Metall vor Korrosion schützt.

Bevorzugt wird die beschriebene Zusammensetzung weiterhin verwendet als Vergussmasse für das Verfüllen von Hohlräumen wie Rissen, Spalten oder Bohrlöchern, wobei die vermischte Zusammensetzung in den Hohlraum gefüllt oder injiziert wird und nach der Aushärtung diesen ausfüllt und die Flanken des Hohlraums zähelastisch miteinander verbindet, wobei auch auf nassem Untergrund eine hervorragende Haftung entsteht. Somit können Strassen, Plätze oder Terrassen mit Schäden auf der Fläche oder an Randsteinen, Borten oder Begrenzungen, sowie Mauern oder sonstige Bauwerke, auf einfache Weise dauerhaft repariert werden, wobei die reparierten Stellen auch gegenüber starken Belastungen sehr beständig sind.

Falls gewünscht, kann beim Verfüllen von Hohlräumen ein sogenannter Anker in den Hohlraum eingefügt werden, zum Beispiel ein Armierungseisen, ein Gewindestab oder ein Bolzen.

Ein weiterer Gegenstand der Erfindung ist somit ein Verfahren zum Beschichten von Substraten oder zum Füllen von Hohlräumen, insbesondere Rissen oder Spalten, dadurch gekennzeichnet, dass die vermischte Zusammensetzung innerhalb der Topfzeit auf ein Substrat aufgebracht oder in einen Hohlraum gefüllt wird und dort aushärtet. Gegebenenfalls kann beim Füllen von Hohlräumen ein Anker in den Hohlraum eingefügt werden, solange die Zusammensetzung noch fliessfähig ist.

Aus der Applikation und Aushärtung der beschriebenen Zusammensetzung bzw. aus dem Verfahren zum Verkleben oder dem Verfahren zum Beschichten von Substraten oder zum Füllen von Hohlräumen wird ein Artikel erhalten. Dieser Artikel kann ein Bauwerk oder ein Teil davon sein, insbesondere eine Strasse, ein Platz, eine Terrasse, ein Randstein, eine Borte, eine Begrenzung oder eine Mauer, oder er kann ein industrielles Gut oder ein Konsumgut sein, insbesondere ein Fahrzeug oder ein Teil davon, insbesondere die Box einer Fahrzeugbatterie.

Ein weiterer Gegenstand der Erfindung ist somit ein Artikel, erhalten aus der beschriebenen Verwendung oder dem beschriebenen Verfahren zum Verkleben oder Füllen von Hohlräumen.

Die erfindungsgemässe Zusammensetzung verfügt über vorteilhafte Eigenschaften, insbesondere eine gute Lagerstabilität, schnelle Aushärtung, auch bei Nässe oder Feuchtigkeit, eine überraschend hohe Festigkeit bei hoher Dehnbarkeit, einen hohen Weiterreisswiderstand, hohe Beständigkeit und hohe Haftkräfte auf vielen Substraten, wobei die Zusammensetzung bei der Verwendung auf Metallen wie Stahl oder Aluminium diese vor Korrosion schützt. Somit ermöglicht die Zusammensetzung eine zuverlässige Verklebung von unbehandeltem Aluminium unter korrosiven Bedingungen.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

Als "Normklima" (NK) wird eine Temperatur von 23±1°C und eine relative Luftfeuchtigkeit von 50±5% bezeichnet.

Die verwendeten Chemikalien waren, sofern nicht anders bezeichnet, von Sigma-Aldrich Chemie GmbH.

N-(3-Trimethoxysilylpropyl)aminobernsteinsäurediethylester wurde hergestellt aus der Umsetzung von Maleinsäurediethylester und 3-Trimethoxysilylpropylamin. Diisodecylphthalat wurde eingesetzt als Palatinol^{®} 10-P (von BASF).

Vergleichsbeispiele sind mit **(Ref.)** gekennzeichnet.

### Herstellung von Silangruppen-haltigen Polymeren:

### Polymer ST-1

Unter Feuchtigkeitsausschluss wurden 400 g Polyoxypropylen-Diol (Acclaim^{®} 4200, OH-Zahl 28 mg KOH/g, von Covestro) und 52 g 4,4'-Diphenylmethandiisocyanat (Desmodur^{®} 44 MC L, von Covestro) unter stetigem Rühren auf 80°C aufgeheizt und auf dieser Temperatur belassen, bis der NCO-Gehalt einen Wert von 1.85 Gewichts-% erreichte.

Anschliessend wurden 70.7 g N-(3-Trimethoxysilylpropyl)aminobernsteinsäure-diethylester zugegeben und bei 60°C solange gerührt, bis mittels FT-IR-Spektroskopie kein Isocyanat mehr nachgewiesen wurde. Das erhaltene Silangruppen-haltige Polymer wurde auf Raumtemperatur abgekühlt und unter Ausschluss von Feuchtigkeit aufbewahrt. Es war klar, bei Raumtemperatur flüssig und hatte einen berechneten Silicium-Gehalt von 1.08 Gewichts-%.

### Polymer ST-2

Unter Feuchtigkeitsausschluss wurden 513.3 g Polyoxypropylen-Diol (Acclaim^{®} 4200, OH-Zahl 28 mg KOH/g, von Covestro), 256.7 g Ethylenoxid-terminiertes Polyoxypropylen-Triol (Caradol^{®} MD34-02, OH-Zahl 35 mg KOH/g, von Shell) und 64.2 g Toluendiisocyanat (Desmodur^{®} T 80 P, von Covestro) unter stetigem Rühren auf 80°C aufgeheizt und auf dieser Temperatur belassen, bis der NCO-Gehalt einen Wert von 1.5 Gewichts-% erreichte.

Anschliessend wurden 105.8 g N-(3-Trimethoxysilylpropyl)aminobernsteinsäure-diethylester zugegeben und bei 60°C solange gerührt, bis mittels FT-IR-Spektroskopie kein Isocyanat mehr nachgewiesen wurde. Das erhaltene Silangruppen-haltige Polymer wurde auf Raumtemperatur abgekühlt und unter Ausschluss von Feuchtigkeit aufbewahrt. Es war klar, bei Raumtemperatur flüssig und hatte einen berechneten Silicium-Gehalt von 0.90 Gewichts-%.

### Polymer ST-3

Unter Feuchtigkeitsausschluss wurden 400 g Polyoxypropylen-Diol (Acclaim^{®} 4200, OH-Zahl 28 mg KOH/g, von Covestro), 44.4 g Isophorondiisocyanat (Vestanat^{®} IPDI, von Evonik) und 0.05 g Dibutylzinndilaurat unter stetigem Rühren auf 80°C aufgeheizt und auf dieser Temperatur belassen, bis der NCO-Gehalt einen Wert von 1.9 Gewichts-% erreichte.

Anschliessend wurden 74.8 g N-(3-Trimethoxysilylpropyl)aminobernsteinsäure-diethylester zugegeben und bei 60°C solange gerührt, bis mittels FT-IR-Spektroskopie kein Isocyanat mehr nachgewiesen wurde. Das erhaltene Silangruppen-haltige Polymer wurde auf Raumtemperatur abgekühlt und unter Ausschluss von Feuchtigkeit aufbewahrt. Es war klar, bei Raumtemperatur flüssig und hatte einen berechneten Silicium-Gehalt von 1.15 Gewichts-%.

### Polymer ST-4

Unter Feuchtigkeitsausschluss wurden 500.0 g Polyoxypropylen-Diol (Voranol^{®} 2000 L, OH-Zahl 55.5 mg KOH/g, von Dow) und 88.7 g Toluendiisocyanat (Desmodur^{®} T 80 P, von Covestro) unter stetigem Rühren auf 80°C aufgeheizt und auf dieser Temperatur belassen, bis der NCO-Gehalt einen Wert von 3.4 Gewichts-% erreichte.

Anschliessend wurden 167.5 g N-(3-Trimethoxysilylpropyl)aminobernsteinsäure-diethylester zugegeben und bei 60°C solange gerührt, bis mittels FT-IR-Spektroskopie kein Isocyanat mehr nachgewiesen wurde. Das erhaltene Silangruppen-haltige Polymer wurde auf Raumtemperatur abgekühlt und unter Ausschluss von Feuchtigkeit aufbewahrt. Es war klar, bei Raumtemperatur flüssig und hatte einen berechneten Silicium-Gehalt von 1.8 Gewichts-%.

### Polymer ST-5 (Ref.)

Unter Feuchtigkeitsausschluss wurden 250.0 g Polyoxypropylen-Diol (Voranol^{®} 2000 L, OH-Zahl 55.5 mg KOH/g, von Dow), 250.0 gPolyoxypropylen-Diol (Voranol^{®} P1010, OH-Zahl 110 mg KOH/g, von Dow) und 130.4 g Toluendiisocyanat (Desmodur^{®} T 80 P, von Covestro) unter stetigem Rühren auf 80°C aufgeheizt und auf dieser Temperatur belassen, bis der NCO-Gehalt einen Wert von 4.9 Gewichts-% erreichte.

Anschliessend wurden 258.5 g N-(3-Trimethoxysilylpropyl)aminobernsteinsäure-diethylester zugegeben und bei 60°C solange gerührt, bis mittels FT-IR-Spektroskopie kein Isocyanat mehr nachgewiesen wurde. Das erhaltene Silangruppen-haltige Polymer wurde auf Raumtemperatur abgekühlt und unter Ausschluss von Feuchtigkeit aufbewahrt. Es war klar, bei Raumtemperatur flüssig und hatte einen berechneten Silicium-Gehalt von 2.3 Gewichts-%.

### Polymer ST-6 (Ref.)

Unter Feuchtigkeitsausschluss wurden 1000 g Polyoxypropylen-Diol (Acclaim^{®} 12200, von Covestro; OH-Zahl 11.0 mg KOH/g), 122.8 g Diisodecylphthalat, 43.6 g Isophorondiisocyanat (Vestanat^{®} IPDI, von Evonik), und 0.12 g Dibutylzinndilaurat unter stetigem Rühren auf 90°C aufgeheizt und auf dieser Temperatur belassen, bis der NCO-Gehalt einen Wert von 0.63 Gewichts-% erreichte. Anschliessend wurden 61.8 g N-(3-Trimethoxysilylpropyl)aminobernsteinsäure-diethylester zugegeben und bei 90°C solange gerührt, bis mittels FT-IR-Spektroskopie kein Isocyanat mehr nachgewiesen wurde. Das erhaltene Silangruppen-haltige Polymer (90 Gewichts-% in Diisodecylphthalat) wurde auf Raumtemperatur abgekühlt und unter Ausschluss von Feuchtigkeit aufbewahrt. Es war klar, bei Raumtemperatur flüssig und hatte einen berechneten Silicium-Gehalt von 0.45 Gewichts-% (gerechnet auf 100 Gewichts-% Polymer, ohne Diisodecylphthalat).

Die Polymere **ST-1** bis **ST-4** weisen einen erfindungsgemässen Silicium-Gehalt auf. Das Polymer **ST-5 (Ref.)** weist einen höheren und das Polymer **ST-6 (Ref.)** weist einen niedrigeren als den erfindungsgemässen Silicium-Gehalt auf. Sie dienen als Vergleich.

### Herstellung von zweikomponentigen Zusammensetzungen:

### Beispiele Z-1 bis Z-7:

Für jede Zusammensetzung wurden die in Tabelle 1 angegebenen Inhaltsstoffe in den angegebenen Mengen (in Gewichtsteilen) der **Komponente-1** mittels eines Zentrifugalmischers (SpeedMixer^{™} DAC 150, FlackTek Inc.) vermischt und unter Ausschluss von Feuchtigkeit aufbewahrt.

Ebenso wurden die in Tabellen 1 angegebenen Inhaltsstoffe der **Komponente-2** verarbeitet und aufbewahrt.

Anschliessend wurden die beiden Komponenten jeder Zusammensetzung im angegebenen Mischungsverhältnis (0.6/1 in Gewicht) mittels des Zentrifugalmischers zu einer homogenen Flüssigkeit verarbeitet und diese unverzüglich folgendermassen geprüft:
Für die Bestimmung der **Topfzeit** wurde eine Menge von 300 g der frisch vermischten Zusammensetzung in einem 500 ml Becher mit einem Spatel in einem Abstand von 5 min umgerührt, bis die Zusammensetzung gefühlsmässig so stark angedickt hatte, dass sie nicht mehr gut verarbeitbar war.

Zur Bestimmung der mechanischen Eigenschaften wurde die vermischte Zusammensetzung auf eine PTFE-beschichtete Folie zu einem Film von 2 mm Dicke ausgegossen und im Normklima gelagert. Nach 1 Tag wurden einige hantelförmige Prüfkörper mit einer Länge von 75 mm bei einer Steglänge von 30 mm und einer Stegbreite von 4 mm aus dem Film ausgestanzt und während weiteren 6 Tagen im Normklima gelagert. Anschliessend wurden diese wie in DIN EN 53504 beschrieben bei einer Zuggeschwindigkeit von 2 mm/min die **Zugfestigkeit** (Bruchkraft), **Bruchdehnung** und der Elastizitätsmodul bei 0.5 bis 1% Dehnung **(E-Modul 0.5-1%)** und bei 0.5 bis 5% Dehnung **(E-Modul 0.5-5%)** bestimmt. Ebenso wurden einige Prüfkörper zur Bestimmung des **Weiterreisswiderstandes** ausgestanzt und gelagert und gemäss DIN ISO 34 bei einer Zuggeschwindigkeit von 500 mm/min geprüft.

Nach 7 Tagen im NK wurde von allen Filmen der **Aspekt** visuell beurteilt. Alle Filme waren nach der Aushärtung von schwarzer Farbe, absolut nicht-klebrig mit einer seidenmatten Oberfläche, homogen und frei von Blasen. Solche Filme wurden als "schön" bezeichnet.

Diese Resultate sind in der Tabellen 2 angegeben.

Die Beispiele **Z-1** bis **Z-3** und **Z-5** bis **Z-6** sind erfindungsgemässe Beispiele, bei welchen das Silangruppen-haltige Polymer einen erfindungsgemässen Silicium-Gehalt aufweist. Das Beispiel **Z-4** ist ein Vergleichsbeispiel, bei welchem das Silangruppen-haltige Polymer einen niedrigeren als den erfindungsgemässen Silicium-Gehalt aufweist. Das Beispiel **Z-7** ist ein Vergleichsbeispiel, bei welchem das Silangruppen-haltige Polymer einen höheren als den erfindungsgemässen Silicium-Gehalt aufweist.

**Tabelle 1: Zusammensetzung der Beispiele Z-1 bis Z-7.**

| **Beispiel** | **Z-1** | **Z-2** | **Z-3** | **Z-4 (Ref.)** | **Z-5** | **Z-6** | **Z-7 (Ref.)** |
|---|---|---|---|---|---|---|---|
| **Komponente-1:** | | | | | | | |
| **Polymer** | **ST-1** 62.2 | **ST-1** 56.0 | **ST-2** 62.2 | **ST-6** 62.2 | **ST-3** 62.2 | **ST-4** 62.2 | **ST-5** 62.2 |
| Diisodecylphthalat | 1.4 | 7.6 | 1.4 | 1.4 | 1.4 | 1.4 | 1.4 |
| Vinyltrimethoxysilan | 2.4 | 2.4 | 2.4 | 2.4 | 2.4 | 2.4 | 2.4 |
| 1,2-Diaminocyclohexan¹ | 27.4 | 27.4 | 27.4 | 27.4 | 27.4 | 27.4 | 27.4 |
| Silquest^{®} A-1110² | 2.3 | 2.3 | 2.3 | 2.3 | 2.3 | 2.3 | 2.3 |
| Ancamine^{®} K54³ | 2.3 | 2.3 | 2.3 | 2.3 | 2.3 | 2.3 | 2.3 |
| Stabilisator⁴ | 0.4 | 0.4 | 0.4 | 0.4 | 0.4 | 0.4 | 0.4 |
| Russ | 1.5 | 1.5 | 1.5 | 1.5 | 1.5 | 1.5 | 1.5 |
| Dibutylzinndilaurat | 0.1 | 0.1 | 0.1 | 0.1 | 0.1 | 0.1 | 0.1 |

| **Komponente-2:** | | | | | | | |
|---|---|---|---|---|---|---|---|
| Bisphenol A-Diglycidylether⁵ | 70.2 | 70.2 | 70.2 | 70.2 | 70.2 | 70.2 | 70.2 |
| Hexandiol-Diglycidylether⁶ | 23.4 | 23.4 | 23.4 | 23.4 | 23.4 | 23.4 | 23.4 |
| Emulgator | 0.5 | 0.5 | 0.5 | 0.5 | 0.5 | 0.5 | 0.5 |
| Wasser | 1.9 | 1.9 | 1.9 | 1.9 | 1.9 | 1.9 | 1.9 |
| pyrogene Kieselsäure | 2.4 | 2.4 | 2.4 | 2.4 | 2.4 | 2.4 | 2.4 |
| Russ | 1.5 | 1.5 | 1.5 | 1.5 | 1.5 | 1.5 | 1.5 |
| Dibutylzinndilaurat | 0.1 | 0.1 | 0.1 | 0.1 | 0.1 | 0.1 | 0.1 |
| Mischverhältnis⁷ | 0.6/1 | 0.6/1 | 0.6/1 | 0.6/1 | 0.6/1 | 0.6/1 | 0.6/1 |

| | | | | | | | |
|---|---|---|---|---|---|---|---|
| ¹ Dytek^{®} DCH-99 (von Invista) ² 3-Aminopropyltrimethoxysilan (von Momentive) ³ 2,4,6-Tris(dimethylaminomethyl)phenol (von Evonik) ⁴ Irganox 1010 (von BASF) ⁵ Araldite^{®} GY 250 (von Huntsman) ⁶ Araldite^{®} DY-H (von Huntsman) ⁷ Verhältnis Komponente-1 / Komponente-2 in Gewichtsteilen | | | | | | | |

**Tabelle 2: Eigenschaften der Beispiele Z-1 bis Z-7.**

| **Beispiel** | **Z-1** | **Z-2** | **Z-3** | **Z-4 (Ref.)** | **Z-5** | **Z-6** | **Z-7 (Ref.)** |
|---|---|---|---|---|---|---|---|
| Silicium-Gehalt des Silangruppen-haltigen Polymers [Gew.%] | 1.08 | 1.08 | 0.90 | 0.45 | 1.15 | 1.8 | 2.3 |
| Diisocyanat im Polymer | MDI | MDI | TDI | IPDI | IPDI | TDI | TDI |
| Topfzeit [min] | 30 | 30 | 30 | 30 | 30 | 30 | 30 |
| Zugfestigkeit [MPa] | 23.6 | 25.2 | 25.1 | 8.8 | 19.5 | 21.0 | 20.3 |
| Bruchdehnung | 38 % | 27 % | 41 % | 35 % | 43 % | 58 % | 36 % |
| E-Modul 0.5-1% [MPa] | 1127 | 1174 | 1059 | 80 | 735 | 892 | 877 |
| E-Modul 0.5-5% [MPa] | 353 | 385 | 386 | 57 | 263 | 307 | 317 |
| Weiterreisswiderstand [N/mm] | 27.5 | 27.9 | 29.6 | 9.4 | 23.9 | 19.7 | 17.5 |
| Aspekt | schön | schön | schön | schön | schön | schön | schön |

Weiterhin wurde die Korrosionsbeständigkeit bzw. Stabilität einer Verklebung von zwei Aluminiumblechen (Legierung 5754, AlMg3, blank) mit der Zusammensetzung aus Beispiel **Z-1** unter Salzwasserbelastung geprüft. Als Vergleich wurden die gleichen Prüfungen mit einem handelsüblichen Zweikomponenten-Epoxidharz-Klebstoff **(2K Epoxy-Klebstoff)** (= schlagfester Strukturklebstoff 07333, von 3M) durchgeführt.

Dazu wurden mehrere verklebte Prüfkörper hergestellt, indem der frisch vermischte Klebstoff zwischen zwei blanke, mit Heptan entfettete Aluminiumbleche (AIMg3, 100 x 25 x 1 mm) in einer Schichtdicke von 0.3 mm mit einer überlappenden Klebefläche von 10 x 25 mm aufgebracht wurde. Nach einer Lagerzeit von 7 Tagen im Normklima wurde die **Zugscherfestigkeit** nach DIN EN 1465 mit einer Zuggeschwindigkeit von 10 mm/min bestimmt. Dieser Wert wird in der Tabelle 3 als **0 Wochen** (Ausgangswert) angegeben.

Weitere solche Prüfkörper wurden diversen Zyklen mit Salzwasserbelastung ausgesetzt, wie im Folgenden beschrieben. Am ersten Tag wurden die Prüfkörper während 15 min bei Raumtemperatur in eine Salzlösung eingelegt (5 Gewichts-% NaCl in deionisiertem Wasser), dann während 95 min aufgehängt im Normklima abgetropft, gefolgt von der Lagerung in einem Klimaschrank während 22 h bei 50°C / 90% relative Feuchtigkeit (= 1 Zyklus). Darauf folgten weitere 4 Tage mit identischem Ablauf, gefolgt von 48 h im Klimaschrank bei 50°C / 90% relative Feuchtigkeit (Wochenende). Dies ergibt eine Lagerzeit von 1 Woche mit 5 Zyklen Salzwasserbelastung. Die Prüfkörper wurden während **2 Wochen (10 Zyklen)** bzw. **4 Wochen (20 Zyklen)** bzw. **6 Wochen (30 Zyklen)** auf diese Weise gelagert und dann jeweils die Zugscherfestigkeit bestimmt, wie vorgäng beschrieben. Nach erfolgter Zugscherfestigkeitsprüfung wurden die Prüfkörper in Hinblick auf das Bruchbild und den Zustand des Aluminiumblechs unter der Verklebung optisch beurteilt **(Aspekt).** "cf" bedeutet Kohäsivbruch (cohesive failure), "af" bedeutet Adhäsivbruch (adhesive failure). "keine Korrosion" bedeutet, dass das Aluminiumblech unter der Verklebung unverändert glänzend ist. "2-3 mm Korrosion" bedeutet, dass das Aluminium unter der Verklebung von den Rändern her in einem Bereich von 2-3 mm matt-weiss verfärbt ist. Im nicht durch den Klebstoff abgedeckten Bereich sind alle Bleche nach Salzwasserbelastung matt-weiss fleckig verfärbt.

Diese Resultate sind in Tabelle 3 angegeben.

**Tabelle 3: Zugscherfestigkeit und Aspekt nach Salzwasserbelastung von Beispiel Z-1 im Vergleich zu einem 2K Epoxy-Klebstoff (07333, von 3M)**

| | **Beispiel Z-1** | **2K Epoxy-Klebstoff (Ref.)** |
|---|---|---|
| 0 Wochen | 13.9 MPa 25 % cf / 75 % af, keine Korrosion | 10.5 MPa 100 % af, 2-3 mm Korrosion |
| 2 Wochen (10 Zyklen) | 13.8 MPa 25 % cf / 75 % af, keine Korrosion | 7.9 MPa 100 % af, 2-3 mm Korrosion |
| 4 Wochen (20 Zyklen) | 12.3 MPa 25 % cf / 75 % af, 0-1 mm Korrosion | 6.3 MPa 100 % af, 2-3 mm Korrosion |
| 6 Wochen (30 Zyklen) | 12.1 MPa 25 % cf / 75 % af, 2-3 mm Korrosion | 5.2 MPa 100 % af, 2-3 mm Korrosion |

Von der Zusammensetzung aus Beispiel **Z-1** wurde weiterhin die Haftung auf trockenem und nassem Beton und Bitumen bestimmt. Dazu wurden 3 Platten aus Beton (500 x 500 x 40 mm) und 3 Platten aus Bitumen (ca. 300 x 200 x 30 mm) bereitgestellt. Zwei Platten wurden jeweils im trockenen Zustand mit der frisch vermischten Zusammensetzung in einer Schichtdicke von etwa 3 bis 4 mm beschichtet. Die dritte Platte wurde während 24 h in deionisiertes Wasser eingelegt und dann im nassen Zustand mit Resten von stehendem Wasser auf der Oberfläche ebenfalls mit der frisch vermischten Zusammensetzung in einer Schichtdicke von etwa 3 bis 4 mm beschichtet. Auf die frisch beschichteten Platten wurden jeweils mehrere mit Aceton gereinigte Zylinder aus Stahl mit einem Durchmesser von 20 mm aufgebracht, so dass zwischen den Stahlzylindern und der Zusammensetzung (Beschichtung) eine Verklebung entstand. Nach einer Lagerzeit der beschichteten Platten von 7 Tagen im Normklima wurde jeweils an einer der beiden trockenen Platten und an der nassen Platte der Haftzugwert bestimmt. Die weitere im trockenen Zustand beschichtete Platte wurde während 7 Tagen in deionisiertes Wasser eingelegt, oberflächlich abgetrocknet und erst dann der Haftzugwert bestimmt. Der Wert für den **Haftzug** wurde jeweils bestimmt, indem der aufgeklebte Stahlzylinder gemäss DIN EN 4624 bei einer Prüfgeschwindigkeit von 2 mm/min bis zum Bruch von der Platte weggezogen wurde.

Diese Resultate sind in Tabelle 4 angegeben.

**Tabelle 4: Haftzugergebnisse der Zusammensetzung aus Beispiel Z-1 auf Beton und Bitumen**

| | | trocken | nass | trocken + 7d Wasser |
|---|---|---|---|---|
| **Beton** | Haftzug [MPa] Bruchbild | 6.54 100% Substratbruch | 6.62 100% Substratbruch | 6.43 100% Substratbruch |
| **Bitumen** | Haftzug [MPa] Bruchbild | 2.35 100% Substratbruch | 2.15 100% Substratbruch | 2.45 100% Substratbruch |

## Patentansprüche

1. Zusammensetzung umfassend
- mindestens ein Silangruppen-haltiges Polymer mit einem Silicium-Gehalt im Bereich von 0.6 bis 2 Gewichts-%, erhalten aus der Umsetzung von mindestens einem Isocyanatgruppen-haltigen Polymer und mindestens einem Amino-, Mercapto- oder Hydroxysilan,
- mindestens ein Epoxid-Flüssigharz und
- mindestens ein Polyamin mit mindestens drei gegenüber Epoxidgruppen reaktiven Aminwasserstoffen.

2. Zusammensetzung gemäss Anspruch 1, **dadurch gekennzeichnet, dass** das Silangruppen-haltige Polymer einen Silicium-Gehalt im Bereich von 0.7 bis 1.5 Gewichts-%, insbesondere 0.8 bis 1.2 Gewichts-%, aufweist.

3. Zusammensetzung gemäss einem der Ansprüche 1 oder 2, **dadurch gekennzeichnet, dass** das Silangruppen-haltige Polymer Silangruppen der Formel (I) aufweist, 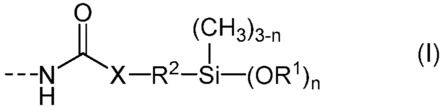 wobei
n für 1 oder 2 oder 3 steht, insbesondere für 2 oder 3,
R¹ für einen linearen oder verzweigten, einwertigen Kohlenwasserstoffrest mit 1 bis 5 C-Atomen steht,
R² für einen linearen oder verzweigten, zweiwertigen Kohlenwasserstoffrest mit 1 bis 12 C-Atomen, welcher gegebenenfalls cyclische und/oder aromatische Anteile und gegebenenfalls ein oder mehrere Heteroatome, insbesondere eine Amido-, Carbamat- oder Morpholinogruppe, aufweist, steht, X für O oder S oder NR³ steht, wobei R³ für ein Wasserstoffatom oder einen linearen oder verzweigten Kohlenwasserstoff-Rest mit 1 bis 20 C-Atomen, welcher gegebenenfalls cyclische Anteile aufweist, und welcher gegebenenfalls eine Alkoxysilylgruppe oder Ether- oder Carbonsäureestergruppen aufweist, steht.

4. Zusammensetzung gemäss einem der Ansprüche 1 bis 3, **dadurch gekennzeichnet, dass** das Isocyanatgruppen-haltige Polymer einen NCO-Gehalt im Bereich von 1.2 bis 4 Gewichts-%, insbesondere 1.2 bis 2.8 Gewichts-%, aufweist.

5. Zusammensetzung gemäss einem der Ansprüche 1 bis 4, **dadurch gekennzeichnet, dass** das Isocyanatgruppen-haltige Polymer erhalten wurde aus der Umsetzung von mindestens einem Polyoxypropylendiol mit einer OH-Zahl im Bereich von 18 bis 58 mg KOH/g, insbesondere 22 bis 40 mg KOH/g, welches endständig gegebenenfalls Oxyethylengruppen aufweist, und mindestens einem Diisocyanat.

6. Zusammensetzung gemäss einem der Ansprüche 1 bis 5, **dadurch gekennzeichnet, dass** das Isocyanatgruppen-haltige Polymer aromatische Isocyanatgruppen aufweist.

7. Zusammensetzung gemäss einem der Ansprüche 1 bis 6, **dadurch gekennzeichnet, dass** das Amino-, Mercapto- oder Hydroxysilan ein Aminosilan ist, insbesondere N-(3-Trimethoxysilylpropyl)aminobernsteinsäurediethylester, N-(3-Dimethoxymethylsilylpropyl)aminobernsteinsäurediethylester oder N-(3-Triethoxysilylpropyl)aminobernsteinsäurediethylester.

8. Zusammensetzung gemäss einem der Ansprüche 1 bis 7, **dadurch gekennzeichnet, dass** das Polyamin ausgewählt ist aus der Gruppe bestehend aus 1,5-Diamino-2-methylpentan, 2,2(4),4-Trimethylhexamethylendiamin, 1,2-Diaminocyclohexan, 1,3-Diaminocyclohexan, 1,4-Diaminocyclohexan, 1,3-Bis(aminomethyl)cyclohexan, 1,4-Bis(aminomethyl)cyclohexan, 1-Amino-3-aminomethyl-3,5,5-trimethylcyclohexan, 2(4)-Methyl-1,3-diaminocyclohexan, Bis(4-aminocyclohexyl)methan, 2,5(2,6)-Bis(aminomethyl)bicyclo[2.2.1]heptan, 1,3-Bis(aminomethyl)benzol, Polyoxypropylendiaminen und Polyoxypropylentriaminen mit mittlerem Molekulargewicht Mₙ im Bereich von 200 bis 500 g/mol, Bis(hexamethylen)triamin, Triethylentetramin, Tetraethylenpentamin, N,N'-Bis(3-aminopropyl)ethylendiamin, N,N-Dimethyldi(1,3-propylen)-triamin, N-Benzyl-1,2-ethandiamin, N-Benzyl-1,2-propandiamin, N-Benzyl-1,3-bis(aminomethyl)benzol, N-(2-Phenylethyl)-1,3-bis(aminomethyl)benzol und dem Addukt von 1,5-Diamino-2-methylpentan oder 1,2-Propandiamin mit Kresylglycidylether.

9. Zusammensetzung gemäss einem der Ansprüche 1 bis 8, **dadurch gekennzeichnet, dass** sie eine erste und eine zweite Komponente umfasst, welche voneinander getrennt herstellt, verpackt und gelagert werden, wobei das Polyamin nicht in der gleichen Komponente wie das Epoxid-Flüssigharz vorliegt.

10. Zusammensetzung gemäss einem der Ansprüche 1 bis 9, **dadurch gekennzeichnet, dass** sie zusätzlich mindestens einen weiteren Bestandteil ausgewählt aus Aminosilanen, Trocknungsmitteln, Beschleunigern, Wasser, Füllstoffen und Weichmachern enthält.

11. Verwendung der Zusammensetzung gemäss einem der Ansprüche 1 bis 10, als Klebstoff, Dichtstoff, Beschichtung oder Vergussmasse, insbesondere auf mindestens einem Metall, bevorzugt Aluminium.

12. Verwendung gemäss Anspruch 11, **dadurch gekennzeichnet, dass** die Zusammensetzung für das Verkleben von Batterieboxen eingesetzt wird.

13. Verfahren zum Verkleben, **dadurch gekennzeichnet, dass** die vermischte Zusammensetzung gemäss einem der Ansprüche 1 bis 10 innerhalb der Topfzeit auf mindestens eines der zu verklebenden Substrate appliziert wird und die Substrate innerhalb der Offenzeit zu einer Verklebung gefügt werden, gefolgt von der Aushärtung der vermischten Zusammensetzung.

14. Verfahren zum Beschichten von Substraten oder zum Füllen von Hohlräumen, insbesondere Rissen oder Spalten, **dadurch gekennzeichnet, dass** die vermischte Zusammensetzung gemäss einem der Ansprüche 1 bis 10 innerhalb der Topfzeit auf ein Substrat aufgebracht oder in einen Hohlraum gefüllt wird und dort aushärtet.

15. Artikel, erhalten aus der Verwendung gemäss einem der Ansprüche 11 oder 12 oder einem Verfahren gemäss Anspruch 13 oder 14.

## Claims

1. Composition comprising
- at least one polymer containing silane groups and having a silicon content in the range from 0.6% to 2% by weight, obtained from the reaction of at least one polymer containing isocyanate groups and at least one amino-, mercapto- or hydroxysilane,
- at least one liquid epoxy resin and
- at least one polyamine having at least three amine hydrogens reactive toward epoxy groups.

2. Composition according to Claim 1, **characterized in that** the polymer containing silane groups has a silicon content in the range from 0.7% to 1.5% by weight, especially 0.8% to 1.2% by weight.

3. Composition according to either of Claims 1 and 2, **characterized in that** the polymer containing silane groups has silane groups of the formula (I) 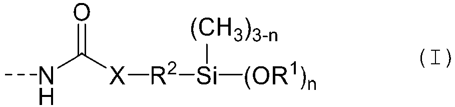 where
n is 1 or 2 or 3, especially 2 or 3,
R¹ is a linear or branched, monovalent hydrocarbyl radical having 1 to 5 carbon atoms,
R² is a linear or branched, divalent hydrocarbyl radical having 1 to 12 carbon atoms that optionally has cyclic and/or aromatic moieties and optionally one or more heteroatoms, especially an amido, carbamate or morpholino group,
X is O or S or NR³ where R³ is a hydrogen atom or a linear or branched hydrocarbyl radical having 1 to 20 carbon atoms that optionally has cyclic moieties, and that optionally has an alkoxysilyl group or ether or carboxylic ester groups.

4. Composition according to any of Claims 1 to 3, **characterized in that** the polymer containing isocyanate groups has an NCO content in the range from 1.2% to 4% by weight, especially 1.2% to 2.8% by weight.

5. Composition according to any of Claims 1 to 4, **characterized in that** the polymer containing isocyanate groups has been obtained from the reaction of at least one polyoxypropylene diol having an OH number in the range from 18 to 58 mg KOH/g, especially 22 to 40 mg KOH/g, and optionally having terminal oxyethylene groups, and at least one diisocyanate.

6. Composition according to any of Claims 1 to 5, **characterized in that** the polymer containing isocyanate groups has aromatic isocyanate groups.

7. Composition according to any of Claims 1 to 6, **characterized in that** the amino-, mercapto- or hydroxysilane is an aminosilane, especially diethyl N-(3-trimethoxysilylpropyl)aminosuccinate, diethyl N-(3-dimethoxymethylsilylpropyl)aminosuccinate or diethyl N-(3-triethoxysilylpropyl)aminosuccinate.

8. Composition according to any of Claims 1 to 7, **characterized in that** the polyamine is selected from the group consisting of 1,5-diamino-2-methylpentane, 2,2(4),4-trimethylhexamethylenediamine, 1,2-diaminocyclohexane, 1,3-diaminocyclohexane, 1,4-diaminocyclohexane, 1,3-bis(aminomethyl)cyclohexane, 1,4-bis(aminomethyl)cyclohexane, 1-amino-3-aminomethyl-3,5,5-trimethylcyclohexane, 2(4)-methyl-1,3-diaminocyclohexane, bis(4-aminocyclohexyl)methane, 2,5(2,6)-bis(aminomethyl)bicyclo[2.2.1]heptane, 1,3-bis(aminomethyl)benzene, polyoxypropylenediamines and polyoxypropylenetriamines with average molecular weight Mₙ in the range from 200 to 500 g/mol, bis(hexamethylene)triamine, triethylenetetramine, tetraethylenepentamine, N,N'-bis(3-aminopropyl) ethylenediamine, N,N-dimethyldi(1,3-propylene)triamine, N-benzylethane-1,2-diamine, N-benzylpropane-1,2-diamine, N-benzyl-1,3-bis(aminomethyl)benzene, N-(2-phenylethyl)-1,3-bis(aminomethyl)benzene and the adduct of 1,5-diamino-2-methylpentane or propane-1,2-diamine with cresyl glycidyl ether.

9. Composition according to any of Claims 1 to 8, **characterized in that** it comprises a first component and a second component that are produced, packed and stored separately, wherein the polyamine is not in the same component as the liquid epoxy resin.

10. Composition according to any of Claims 1 to 9, **characterized in that** it additionally comprises at least one further constituent selected from aminosilanes, driers, accelerators, water, fillers and plasticizers.

11. Use of the composition according to any of Claims 1 to 10 as adhesive, sealant, coating or casting compound, especially on at least one metal, preferably aluminium.

12. Use according to Claim 11, **characterized in that** the composition is used for the bonding of battery boxes.

13. Method of bonding, **characterized in that** the mixed composition according to any of Claims 1 to 10 is applied to at least one of the substrates to be bonded within the pot life, and the substrates are joined to give a bond within the open time, followed by the curing of the mixed composition.

14. Method of coating substrates or of filling cavities, especially cracks or gaps, **characterized in that** the mixed composition according to any of Claims 1 to 10 is applied to a substrate or used to fill a cavity within the pot life, and cures in situ.

15. Article obtained from the use according to either of Claims 11 and 12 or a method according to Claim 13 or 14.

## Revendications

1. Composition, comprenant
- au moins un polymère contenant des groupes silane présentant une teneur en silicium dans la plage de 0,6 à 2% en poids, obtenu par transformation d'au moins un polymère contenant des groupes isocyanate et d'au moins un aminosilane, mercaptosilane ou hydroxysilane,
- au moins une résine époxyde liquide et
- au moins une polyamine présentant au moins trois hydrogènes d'amine réactifs vis-à-vis des groupes époxyde.

2. Composition selon la revendication 1, **caractérisée en ce que** le polymère contenant des groupes silane présente une teneur en silicium dans la plage de 0,7 à 1,5% en poids, en particulier de 0,8 à 1,2% en poids.

3. Composition selon l'une des revendications 1 ou 2, **caractérisée en ce que** le polymère contenant des groupes silane présente des groupes silane de formule (I), 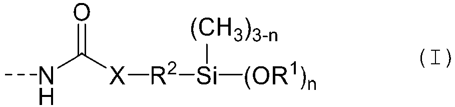 dans laquelle
n vaut 1 ou 2 ou 3, en particulier 2 ou 3,
R¹ représente un radical hydrocarboné monovalent linéaire ou ramifié comprenant 1 à 5 atomes de carbone,
R² représente un radical hydrocarboné divalent linéaire ou ramifié, comprenant 1 à 12 atomes de carbone, qui présente le cas échéant des proportions cycliques et/ou aromatiques et le cas échéant un ou plusieurs hétéroatomes, en particulier un groupe amido, carbamate ou morpholino,
X représente O ou S ou NR³, R³ représentant un atome d'hydrogène ou un radical hydrocarboné linéaire ou ramifié comprenant 1 à 20 atomes de carbone, qui présente le cas échéant des proportions cycliques et qui présente le cas échéant un groupe alcoxysilyle ou des groupes éther ou des groupes ester d'acide carboxylique.

4. Composition selon l'une des revendications 1 à 3, **caractérisée en ce que** le polymère contenant des groupes isocyanate présente une teneur en NCO dans la plage de 1,2 à 4% en poids, en particulier de 1,2 à 2,8% en poids.

5. Composition selon l'une des revendications 1 à 4, **caractérisée en ce que** le polymère contenant des groupes isocyanate a été obtenu par la transformation d'au moins un polyoxypropylènediol présentant un indice d'OH dans la plage de 18 à 58 mg de KOH/g, en particulier de 22 à 40 de mg KOH/g, qui présente, le cas échéant, en position d'extrémité, des groupes oxyéthylène, et d'au moins un diisocyanate.

6. Composition selon l'une des revendications 1 ou 5, **caractérisée en ce que** le polymère contenant des groupes isocyanate présente des groupes isocyanate aromatique.

7. Composition selon l'une des revendications 1 à 6, **caractérisée en ce que** l'aminosilane, le mercaptosilane ou l'hydroxysilane est un aminosilane, en particulier l'ester diéthylique de l'acide N-(3-triméthoxysilylpropyl)aminosuccinique, l'ester diéthylique de l'acide N-(3-diméthoxyméthylsilylpropyl)aminosuccinique ou l'ester diéthylique de l'acide N-(3-triéthoxysilylpropyl)aminosuccinique.

8. Composition selon l'une des revendications 1 à 7, **caractérisée en ce que** la polyamine est choisie dans le groupe constitué par le 1,5-diamino-2-méthylpentane, le 2,2(4),4-triméthylhexaméthylènediamine, le 1,2-diaminocyclohexane, le 1,3-diaminocyclohexane, le 1,4-diaminocyclohexane, le 1,3-bis(aminométhyl)cyclohexane, le 1,4-bis(aminométhyl)cyclohexane, le 1-amino-3-aminométhyl-3,5,5-triméthylcyclohexane, le 2(4)-méthyl-1,3-diaminocyclohexane, le bis(4-aminocyclohexyl)méthane, le 2,5(2,6)-bis(aminométhyl)bicyclo[2.2.1]heptane, le 1,3-bis(aminométhyl)benzène, les polyoxypropylènediamines et les polyoxypropylènetriamines présentant une masse moléculaire moyenne Mₙ dans la plage de 200 à 500 g/mole, la bis (hexaméthylène)triamine, la triéthylènetétramine, la tétraéthylènepentamine, la N,N'-bis(3-aminopropyl)éthylènediamine, la N,N-diméthyl-di(1,3-propylène)triamine, la N-benzyl-1,2-éthanediamine, la N-benzyl-1,2-propanediamine, le N-benzyl-1,3-bis(aminométhyl)benzène, le N-(2-phényléthyl)-1,3-bis(aminométhyl)benzène et le produit d'addition du 1,5-diamino-2-méthylpentane ou de la 1,2-propanediamine et du crésylglycidyléther.

9. Composition selon l'une des revendications 1 à 8, **caractérisée en ce qu'**elle comprend un premier et un deuxième composant qui sont préparés, emballés et stockés séparément l'un de l'autre, la polyamine ne se trouvant pas dans le même composant que la résine époxyde liquide.

10. Composition selon l'une des revendications 1 à 9, **caractérisée en ce qu'**elle contient en outre au moins un autre constituant choisi parmi les aminosilanes, les dessiccateurs, les accélérateurs, l'eau, les charges et les plastifiants.

11. Utilisation de la composition selon l'une des revendications 1 à 10 comme adhésif, matériau d'étanchéité, revêtement ou masse de coulage, en particulier sur au moins un métal, de préférence l'aluminium.

12. Utilisation selon la revendication 11, **caractérisée en ce que** la composition est utilisée pour le collage de boîtiers de batterie.

13. Procédé pour le collage, **caractérisé en ce que** la composition mélangée selon l'une des revendications 1 à 10 est appliquée pendant la durée de vie en pot sur au moins l'un des substrats à coller et les substrats sont assemblés en un collage pendant le temps ouvert, suivis du durcissement de la composition mélangée.

14. Procédé de revêtement de substrats ou de remplissage d'espaces creux, en particulier de fissures ou de fentes, **caractérisé en ce que** la composition mélangée selon l'une des revendications 1 à 10 est appliquée sur un substrat ou introduite dans un espace creux pendant la durée de vie en pot et y durcit.

15. Article, obtenu à partir de l'utilisation selon l'une des revendications 11 ou 12 ou d'un procédé selon la revendication 13 ou 14.
